# EUROPEAN PATENT SPECIFICATION

(11) **EP 3 942 489 B1**
(45) Date of publication and mention of the grant of the patent: **23.04.2025**
(21) Application number: 19802360.8
(22) Date of filing: 21.10.2019
(51) Int. Cl.: G06Q 10/06, G06Q 10/04, G06Q 50/02, A01D 34/00, B64U 101/30, G06Q 10/047, G06Q 10/0631

(54) **WORKSITE EQUIPMENT PATH PLANNING**
PLANUNG VON GERÄTEWEGEN AM ARBEITSPLATZ
PLANIFICATION DE TRAJET D'ÉQUIPEMENT DE CHANTIER

(43) Date of publication of application: 26.01.2022
(73) Proprietor: HUSQVARNA AB, 561 82 Huskvarna (SE)
(72) Inventor: GRAHAM, Brad, Harrisburg, North Carolina 28075 (US); BARLOW, Dale, Denver, North Carolina 28037 (US); PETERS, Frank, Concord, North Carolina 28025 (US); ANDERMANN, Scott, Charlotte, North Carolina 28210 (US); POWELL, Eric, Charlotte, North Carolina 28216 (US)
(74) Representative: Schröer, Gernot H.
(86) International application number: PCT/US2019/057238
(87) International publication number: WO 2021/080558

(56) References cited:
- CA-A1- 3 015 551
- US-A1- 2018 035 606
- US-A1- 2019 230 850

## Description

### TECHNICAL FIELD

Example embodiments generally relate to worksite analysis and, more particularly, relate to apparatuses, systems, and methods for capturing information describing a worksite and analyzing the information to determine equipment paths and crew workflows.

### BACKGROUND

The business of lawn maintenance, which may be an example of vegetation maintenance, has proven to be a lucrative one. However, many of the practices of the lawn maintenance crews are based on experience and intuition and may not always be the most effective practices to efficiently maintain healthy, well-groomed lawns and other vegetation. For example, practices associated with simply determining a mowing pattern for a lawn can have substantial impacts on the health of the lawn, the quality of the cut, and the efficiency (e.g., time to completion) of the cut. In some instances, with respect to work site efficiency, the quoting process for determining the number of man-hours (and thus the cost) needed to perform a regular vegetation maintenance on a residential lawn or other worksite may be quite inaccurate using conventional approaches, which can lead to lost time and profits. As such, there continues to be a need to innovate in the area of worksite analysis and workflow optimization with respect to, for example, vegetation maintenance and similar worksite operations.

US 2018/035606 A1 discloses a system that aligns with property trimming and cutting tools for autonomous vehicles. The system is linked to superimposed design overlays giving augmented reality guidance. Further, an interactive imaging apparatus is provided for an improved viewing method.

CA 3 015 551 discloses controlling of an unmanned aerial vehicle to collect and forward information pertaining to a forestry worksite area. The UAV is controlled to fly to a first location and capture image information at the first location and to send the captures image information to a communication system.

US 2019/0230850 A1 discloses a number of autonomous outdoor devices and one or more service vehicles. The service vehicles are configured to selectively load and unload one or more of the autonomous outdoor power devices at a jobsite based on instructions received by a controller of the one or more service vehicles.

### BRIEF SUMMARY OF SOME EXAMPLES

A system according to the invention comprises an autonomous vehicle comprising a camera and a position sensor. The autonomous vehicle is configured to operate the camera and position sensor to capture image data associated with a worksite. The image data comprises images of the worksite with corresponding position coordinates. The system also comprises a worksite analysis engine comprising processing circuitry. The processing circuitry is configured to receive the image data of the worksite captured by the autonomous vehicle, generate a virtual layout of the worksite based on the image data, receive equipment data comprising a list of equipment available to be deployed at the worksite with corresponding equipment attributes, receive crew data comprising a number of crew members available to be deployed at the worksite, and generate a workflow based on the virtual layout, the equipment data, and the crew data. The workflow comprises workflow assignments for each crew member at the worksite, each workflow assignment indicating a task, equipment to perform the task, and an equipment path for the task.

A method according to the invention comprises capturing image data associated with a worksite. The image data is captured by an autonomous vehicle comprising a camera and a position sensor. The autonomous vehicle is configured to operate the camera and position sensor to capture the image data with corresponding position coordinates. The method according to the invention also comprises receiving the image data of the worksite captured by the autonomous vehicle by processing circuitry of a worksite analysis engine, generating a virtual layout of the worksite based on the image data by the processing circuitry, receiving equipment data comprising a list of equipment available to be deployed at the worksite with corresponding equipment attributes, receiving crew data comprising a number of crew members available to be deployed at the worksite, and generating a workflow based on the virtual layout, the equipment data, and the crew data. The workflow may comprise workflow assignments for each crew member at the worksite, each workflow assignment indicating a task, equipment to perform the task, and an equipment path for the task.

### BRIEF DESCRIPTION OF THE SEVERAL VIEWS OF THE DRAWING(S)

Having thus described some example embodiments in general terms, reference will now be made to the accompanying drawings, which are not necessarily drawn to scale, and wherein:
FIG. 1 illustrates an example system for worksite analysis according to an example embodiment;
FIG. 2A provides a block diagram of an example worksite analysis engine according to an example embodiment;
FIG. 2B provides a block diagram of an example autonomous vehicle according to an example embodiment;
FIG. 2C provides a block diagram of an example equipment transportation vehicle according to an example embodiment;
FIG. 2D provides a block diagram of an example equipment according to an example embodiment;
FIG. 2E provides a block diagram of an example crew device according to an example embodiment;
FIG. 3 illustrates example image captures by an autonomous vehicle according to an example embodiment;
FIG. 4 illustrates an example virtual layout of a worksite according to an example embodiment;
FIG. 5 illustrates an example virtual layout with equipment paths according to an example embodiment;
FIG. 6 illustrates an example virtual layout with another equipment path according to an example embodiment;
FIG. 7 illustrates an example virtual layout with defined work zones according to an example embodiment;
FIG. 8 illustrates an example virtual layout with defined work zones and corresponding equipment paths according to an example embodiment;
FIGs. 9-13 illustrates example equipment paths within respective work zones in accordance with an example workflow according to an example embodiment; and
FIG. 14 illustrates a block diagram flowchart of an example method worksite analysis and workflow generation according to an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability, or configuration of the present disclosure. Rather, these example embodiments are provided so that this disclosure will satisfy applicable legal requirements. Like reference numerals refer to like elements throughout.

As used herein the term "or" is used as the logical or where any one or more of the operands being true results in the statement being true. As used herein, the phrase "based on" as used in, for example, "A is based on B" indicates that B is a factor that determines A, but B is not necessarily the only factor that determines A.

According to some example embodiments, a system is provided that is configured to perform worksite analysis in effort to increase efficiency in consideration of a number of factors. In this regard, according to some example embodiments, an autonomous vehicle, such as an aerial or land-based drone may be employed to capture position-based images of a worksite (e.g., a residential or commercial property) for provision to a worksite analysis engine to generate a model of the worksite in the form of a virtual layout. According to some example embodiments, the autonomous vehicle may be configured to capture perspective images of the worksite (as opposed merely overhead images) that can be leveraged to generate the virtual layout with topology information. The worksite analysis engine may leverage this virtual layout with other sources of information to generate, for example, an efficient equipment path to be used when performing vegetation maintenance activities (e.g., mowing, edging, trimming, blowing, aerating, seeding, leaf collection, fertilizing, or the like).

According to some example embodiments, the worksite analysis engine may implement such generated equipment paths in the context of a crew workflow. In this regard, the virtual layout may be analyzed in association with equipment data and crew data to generate a workflow as a type of sequential crew task list for efficiently and effectively performing worksite maintenance. The equipment data may include a list of available equipment for use at the worksite with corresponding equipment attributes (e.g., mowing deck width, turning radius, speed, slope limitations, clipping catch capacity, fuel consumption rate, fuel capacity, and the like). The crew data may include a number of available crew members and, for example, crew member experience data. Using this information, the worksite analysis engine may be configured to generate a workflow for each crew member, where a workflow is comprised of a sequential list of work assignments. Each work assignment may include a task to be performed, the equipment to be used to perform the task, and the equipment path to be used when performing the task. As further described below, the worksite analysis engine may also be configured to perform workflow compliance analyses to determine if the workflows are being properly executed by the crew members.

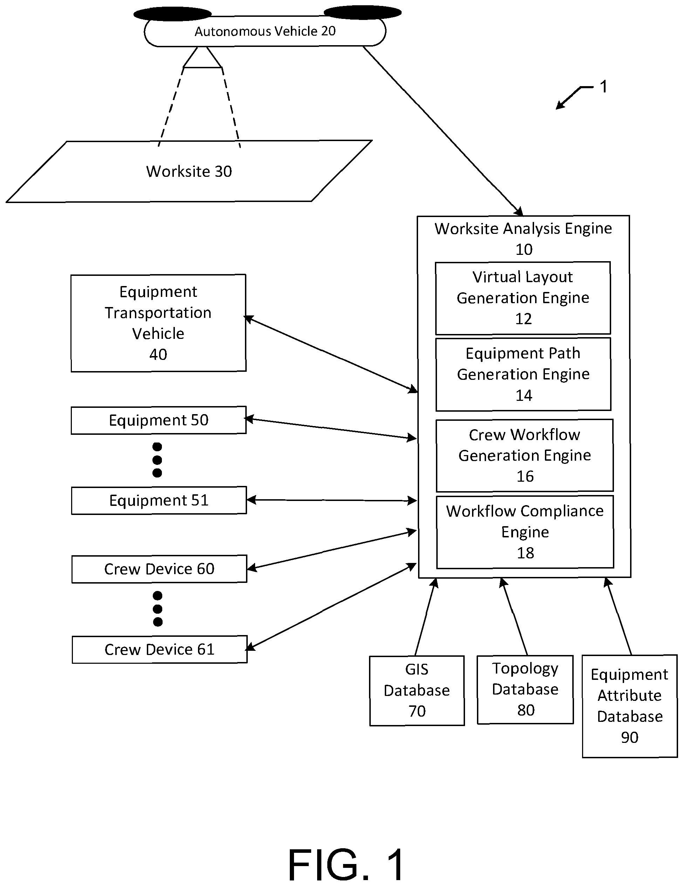

FIG. 1 illustrates an example system 1 for performing worksite analysis. According to some example embodiments, the system 1 may comprise a worksite analysis engine 10 and an autonomous vehicle 20. Additionally, the system 1 may comprise an equipment transportation vehicle 40, equipment 50 and 51, and crew devices 60 and 61. Further, the system 1 may also comprise a GIS (geographic information system) database 70, a topology database 80, and an equipment attribute database 90.

In short, the worksite analysis engine 10 may be configured to gather information from a number of sources to perform various functionalities as described herein. In this regard, the worksite analysis engine 10 may comprise a number of sub-engines, according to some example embodiments, that may be stand-alone engines that need not be bundled into the worksite analysis engine 10 as shown in FIG. 1. In this regard, the worksite analysis engine 10 may comprise a virtual layout generation engine 12, an equipment path generation engine 14, a crew workflow generation engine 16, and a workflow compliance engine 18. These engines may be configured to perform various functionalities as further described below by employing configured processing circuitry of the worksite analysis engine 10.

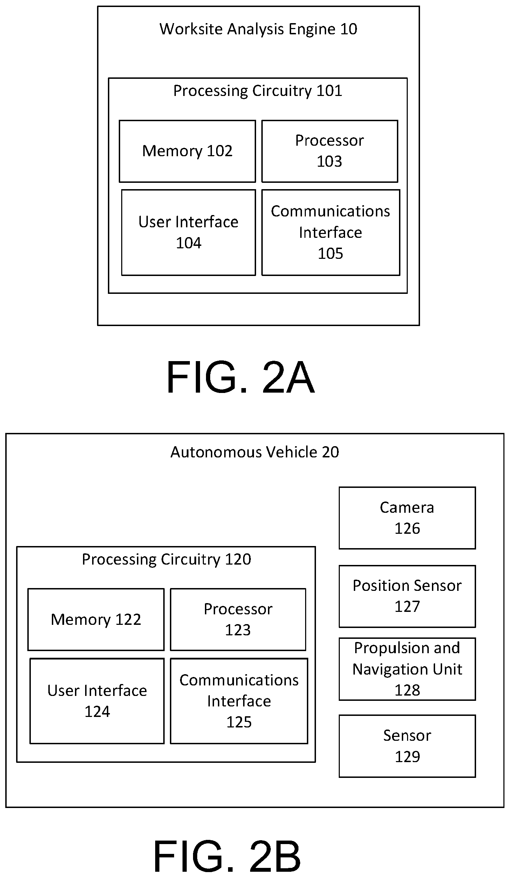

With respect to the structural architecture of the worksite analysis engine 10, referring now to the block diagram of FIG. 2A, the worksite analysis engine 10 may comprise processing circuitry 101, which may be configured to receive inputs and provide outputs in association with the various functionalities of, for example, the virtual layout generation engine 12, the equipment path generation engine 14, the crew workflow generation engine 16, and the workflow compliance engine 18. In this regard, one example architecture of the worksite analysis engine 10 is provided in FIG. 2A, wherein the worksite analysis engine 10 comprises the processing circuitry 101 comprising a memory 102, a processor 103, a user interface 104, and a communications interface 105. The processing circuitry 101 may be operably coupled to other components of the worksite analysis engine 10 that are not shown in FIG. 2A. The processing circuitry 101 may be configured to perform the functionalities of the worksite analysis engine 10, and more particularly the virtual layout generation engine 12, the equipment path generation engine 14, the crew workflow generation engine 16, and the workflow compliance engine 18, as further described herein.

Further, according to some example embodiments, processing circuitry 101 may be in operative communication with or embody, the memory 102, the processor 103, the user interface 104, and the communications interface 105. Through configuration and operation of the memory 102, the processor 103, the user interface 104, and the communications interface 105, the processing circuitry 101 may be configurable to perform various operations as described herein. In this regard, the processing circuitry 101 may be configured to perform computational processing, memory management, user interface control and monitoring, and manage remote communications, according to an example embodiment. In some embodiments, the processing circuitry 101 may be embodied as a chip or chip set. In other words, the processing circuitry 101 may comprise one or more physical packages (e.g., chips) including materials, components or wires on a structural assembly (e.g., a baseboard). The processing circuitry 101 may be configured to receive inputs (e.g., via peripheral components), perform actions based on the inputs, and generate outputs (e.g., for provision to peripheral components). In an example embodiment, the processing circuitry 101 may include one or more instances of a processor 103, associated circuitry, and memory 102. As such, the processing circuitry 101 may be embodied as a circuit chip (e.g., an integrated circuit chip, such as a field programmable gate array (FPGA)) configured (e.g., with hardware, software or a combination of hardware and software) to perform operations described herein.

In an example embodiment, the memory 102 may include one or more non-transitory memory devices such as, for example, volatile or non-volatile memory that may be either fixed or removable. The memory 102 may be configured to store information, data, applications, instructions or the like for enabling, for example, the functionalities described with respect to the virtual layout generation engine 12, the equipment path generation engine 14, the crew workflow generation engine 16, and the workflow compliance engine 18. The memory 102 may operate to buffer instructions and data during operation of the processing circuitry 101 to support higher-level functionalities, and may also be configured to store instructions for execution by the processing circuitry 101. The memory 102 may also store image data, equipment data, crew data, and virtual layouts as described herein. According to some example embodiments, such data may be generated based on other data and stored or the data may be retrieved via the communications interface 105 and stored.

As mentioned above, the processing circuitry 101 may be embodied in a number of different ways. For example, the processing circuitry 101 may be embodied as various processing means such as one or more processors 103 that may be in the form of a microprocessor or other processing element, a coprocessor, a controller or various other computing or processing devices including integrated circuits such as, for example, an ASIC (application specific integrated circuit), an FPGA, or the like. In an example embodiment, the processing circuitry 101 may be configured to execute instructions stored in the memory 102 or otherwise accessible to the processing circuitry 101. As such, whether configured by hardware or by a combination of hardware and software, the processing circuitry 101 may represent an entity (e.g., physically embodied in circuitry - in the form of processing circuitry 101) capable of performing operations according to example embodiments while configured accordingly. Thus, for example, when the processing circuitry 101 is embodied as an ASIC, FPGA, or the like, the processing circuitry 101 may be specifically configured hardware for conducting the operations described herein. Alternatively, as another example, when the processing circuitry 101 is embodied as an executor of software instructions, the instructions may specifically configure the processing circuitry 101 to perform the operations described herein.

The communication interface 105 may include one or more interface mechanisms for enabling communication with other devices external to worksite analysis engine 10, via, for example, a network, which may, for example, be a local area network, the Internet, or the like, through a direct (wired or wireless) communication link to another external device, or the like. In some cases, the communication interface 105 may be any means such as a device or circuitry embodied in either hardware, or a combination of hardware and software, that is configured to receive or transmit data from/to devices in communication with the processing circuitry 101. In some example embodiments, the communications interface may comprise, for example, a radio frequency identification tag reader capable of reading tags in close proximity to the communications interface to gather information from the tag (e.g., identification data) and to determine a proximity of the tag to the communications interface. The communications interface 105 may be a wired or wireless interface and may support various communications protocols (WIFI, Bluetooth, cellular, or the like).

The communications interface 105 of the worksite analysis engine 10 may be configured to communicate directly or indirectly to various components of the system 1 of FIG. 1. In this regard, via the communications interface 105, the worksite analysis engine 10 may be configured to communicate directly or indirectly with the autonomous vehicle 20, the equipment transportation vehicle 40, the equipment 50 and 51, the crew device 60 and 61, the GIS database 70, the topology database 80, and/or the equipment database 90.

Referring back to FIG. 2A, the user interface 104 may be controlled by the processing circuitry 101 to interact with peripheral devices that can receive inputs from a user or provide outputs to a user. The user interface 104 may be configured to provide the inputs (e.g., from a user) to the processor 103, and the processor 103 may be configured to receive the inputs from the user interface 104 and act upon the inputs to, for example, determine and output a result via the user interface 104. For example, according to some example embodiments, a user may interact with the user interface 104 to input a stripping pattern for mowing an area of the worksite 30 and indications of the stripping pattern may be provided to the processor 103 for analysis and determination of a path as further described herein. In this regard, via the user interface 104, the processing circuitry 101 may be configured to provide control and output signals to a device of the user interface such as, for example, a keyboard, a display (e.g., a touch screen display), mouse, microphone, speaker, or the like. The user interface 104 may also produce outputs, for example, as visual outputs on a display, audio outputs via a speaker, or the like.

Referring now to the block diagram of FIG. 2B, a structural architecture of the autonomous vehicle 20 is provided. As mentioned above, the autonomous vehicle 20 may be an aerial or land-based drone configured to capture image data as part of a drone-based worksite survey. The autonomous vehicle 20 may comprise processing circuitry 120, which may include memory 122, processor 123, user interface 124, and communications interface 125. The processing circuitry 120, including the memory 122, the processor 123, the user interface 124, and the communications interface 125 may be structured the same or similar to the processing circuitry 101 with the memory 102, the processor 103, the user interface 104, and the communications interface 105, respectively. However, the processing circuitry 120 may be configured to perform or control the functionalities of the autonomous vehicle 20 as described herein. In this regard, for example, the communications interface 125 of the processing circuitry 120 may be configured to establish a communications link with the worksite analysis engine 10 to provide the worksite analysis engine 10 with image data. According to some example embodiments, the image data may be provided via the communications interface 125 indirectly from the autonomous vehicle 20 to the worksite analysis engine 10 via for example a removable memory stick or jump drive.

In addition to the processing circuitry 120, the autonomous vehicle 20 may also comprise a camera 126, a position sensor 127, and a propulsion and navigation unit 128. The processing circuitry 120 may be configured to control the operation of the camera 126, the position sensor 127, and the propulsion and navigation unit 128.

The camera 126 may be configured to capture images of a selected area around the autonomous vehicle 20. In this regard, the camera 126 may be a digital imaging device configured to receive light to capture an image and convert the light into data representative of the light captured by the camera 126 as a component of image data as described herein.

According to some example embodiments, the camera 126 may be controlled by the processing circuitry 120 to capture images as requested by the processing circuitry 120. In this regard, the processing circuitry 120 may be configured to cause images to be captured such that the images may be combined (e.g., overlapping images) to generate a larger image or model from the component captured images. The camera 126 may be stationary or moveable relative to the autonomous vehicle 20 to which the camera 126 is affixed. In example embodiments wherein the camera is stationary, the autonomous vehicle 20 may move into different physical positions to capture a desired image. Alternatively, if the camera 126 is moveable, the processing circuitry 120 may be configured to aim the camera 126 at a target area to capture an image using a motorized pivot or turret. Possibly with the assistance of the position sensor 127, an angle of perspective (e.g., relative to the ground) may be stored in association with a captured image. In this regard, considering an autonomous vehicle 20 that is an aerial drone, the camera 126 may be configured to capture images at different perspectives (i.e., not simply overhead images aimed straight down). Such perspective images may be combined and leveraged to generate geospatial models that include topological data indicating terrain slopes and the like.

The position sensor 127 may be circuitry configured to determine a current position of the autonomous vehicle 20 and may generate position data indicative of the position of the autonomous vehicle 20. The position of the autonomous vehicle 20 may be defined with respect to a coordinate system (e.g., latitude and longitude). Further, the position sensor 127 may be configured to determine an orientation of the autonomous vehicle 20 with respect to, for example, parameters such as pitch, roll, and yaw. The position and orientation of the autonomous vehicle 20 as determined by the position sensor 127 may be components of position data for the autonomous vehicle 20. The position sensor 127 may, for example, include circuitry (including, for example, antennas) configured to capture wireless signals that may be used for determining a position of the position sensor 127 and the autonomous vehicle 20 based on the signals. In this regard, the position sensor 127 may be configured to receive global positioning system (GPS) signals to determine a position of the autonomous vehicle 20. In this regard, according to some example embodiments, real-time kinematic (RTK) positioning may be employed to assist with correction of GPS positioning. Additionally, the receipt of wireless signals may also be leveraged to determine a position based on locating approaches such as received signal strength indication (RSSI), time-difference-of-arrival (TDOA), and the like. Additionally or alternatively, the position sensor 127 may be configured to determine a position of the autonomous vehicle 20 using locating techniques such as received signal strength, time of arrival, or the like.

Additionally, the autonomous vehicle 20 may include a propulsion and navigation unit 128. The propulsion and navigation unit 128 may include the mechanisms and components configured to move the autonomous vehicle 20. In this regard, in an example embodiment where the autonomous vehicle 20 is an aerial drone, the propulsion and navigation unit 128 may comprise motors and controllable rotors to fly and steer the drone. In an example embodiment where the autonomous vehicle 20 is a land-based drone, the propulsion and navigation unit 128 may comprise motorized wheels, tracks, or the like configured to assist with moving the drone on land. The propulsion and navigation unit 128 may also include the power source for powering the motors. The propulsion and navigation unit 128 may also include navigation circuitry configured to permit the processing circuitry 120 to steer the autonomous vehicle 20 into desired locations and positions.

Additionally, the autonomous vehicle 20 may include one or more sensors 129 which may take a variety of different forms. The sensor 129 may be configured to take one or more measurements of the worksite 30 under the control of the processing circuitry 120. The measurement information may be coupled with position data to indicate a position or location within the worksite 30 where the measurement was taken. The measurement information gathered by the sensor(s) 129 may be provided to the worksite analysis engine 10 (e.g., possibly coupled with the respective position data) in the form of sensor data and integrated with the image data to be used as input component for the determinations made by the worksite analysis engine 10 or the sub-engines thereof.

In this regard, according to some example embodiments, the sensor 129 may be configured to gather additional information to assist with topographical mapping. The sensor 129 may be configured to use RADAR (radio azimuth direction and ranging), LiDAR (light detection and ranging), or the like to make measurements and capture information regarding, for example, changes in elevation and contours of the surface of the worksite 30 to be provided to the worksite analysis engine 10.

According to some example embodiments, the sensor 129 may additionally or alternatively be configured to measure characteristics of the soil in the worksite 30 to be provided as sensor data. In this regard, the sensor 129 may be a type of imaging sensor that detects, for example, temperature variations (e.g., via infrared light) across the worksite 30. Additionally, or alternatively, the sensor 129 may detect a hydration level in the soil at the worksite 30. In some example embodiments, hydration levels may be detected via imaging techniques at certain electromagnetic wavelengths. However, according to some example embodiments, the sensor 129 may include a probe that may penetrate the surface of the worksite 30 (e.g., extend a desired depth into the soil) to take hydration measurements (e.g., at selected locations across the worksite 30). Additionally or alternatively, such a sensor 129 may be configured to take other measurements of the soil, such as, for example, pH, color, compaction, organic content, texture, or the like.

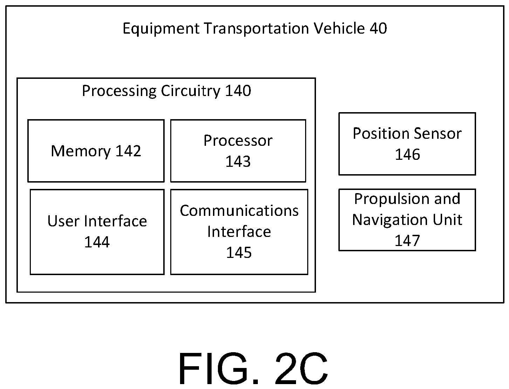

Referring now to the block diagram of FIG. 2C, a structural architecture of the equipment transportation vehicle 40 is provided. As mentioned above, the equipment transportation vehicle 40 may be a truck, van, trailer, or the like that is configured to transport equipment to a worksite. The equipment transportation vehicle 40 may comprise processing circuitry 140, which may include memory 142, processor 143, user interface 144, and communications interface 145. The processing circuitry 140, including the memory 142, the processor 143, the user interface 144, and the communications interface 145, may be structured the same or similar to the processing circuitry 101 with the memory 102, the processor 103, the user interface 104, and the communications interface 105, respectively. However, the processing circuitry 140 may be configured to perform or control the functionalities of the equipment transportation vehicle 40 as described herein. **In** this regard, for example, the user interface 124 of the processing circuitry 120 may be configured to establish a communications link with the worksite analysis engine 10 to provide the worksite analysis engine 10 with data, such as, position data for the equipment transportation vehicle 40.

**In** addition to the processing circuitry 140, the equipment transportation vehicle 40 may also comprise a position sensor 146 and a propulsion and navigation unit 147. The processing circuitry 120 may be configured to control the operation of the position sensor 146 and the propulsion and navigation unit 127. **In** this regard, the position sensor 146 may be structured and configured in the same or similar manner as the position sensor 127.

Additionally, the equipment transportation vehicle 40 may include a propulsion and navigation unit 147. The propulsion and navigation unit 147 may include the mechanisms and components configured to move the equipment transportation vehicle 40. In this regard, in an example embodiment, the propulsion and navigation unit 147 may comprise motorized wheels, tracks, or the like configured to assist with moving the equipment transportation vehicle 40. In this regard, the propulsion and navigation unit 128 may include a user interface for driving the equipment transportation vehicle 40 by a crew member.

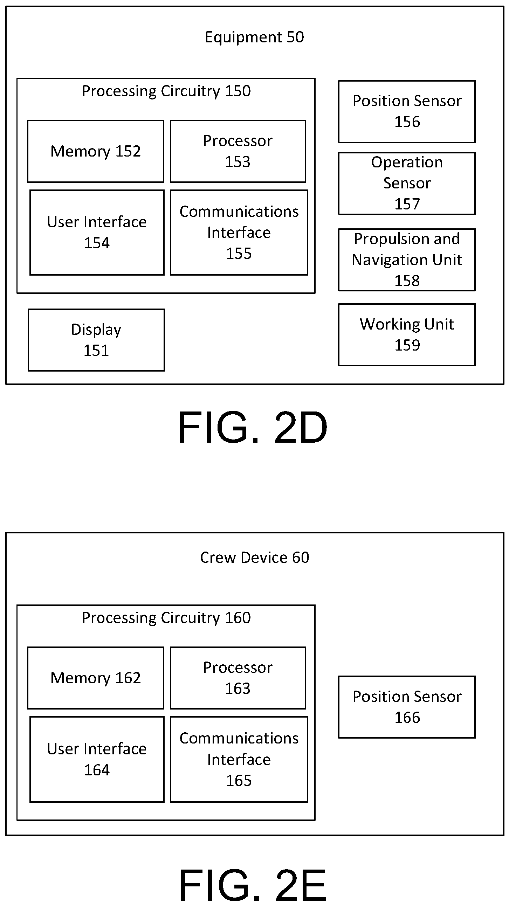

Referring now to the block diagram of FIG. 2D, a structural architecture of the equipment 50 is provided. Note that the other equipment in FIG. 1 (e.g., equipment 51) may be structured similar to equipment 50 with the exception of the working unit 158, but otherwise the block diagram architecture may be the same or similar. As mentioned above, the equipment 50 may be a tool or device that has utility in the context of the worksite 30. According to some example embodiments, the equipment 50 may be vegetation maintenance equipment. In this regard, if vegetation maintenance is to be performed at the worksite 30, the equipment 50 may be a ride-on or push mower, a trimmer, a blower, an aerator, a fertilizer spreader, a pruner, or the like. According to some example embodiments, the equipment 50 may comprise processing circuitry 150, which may include memory 152, processor 153, user interface 154, and communications interface 155. The processing circuitry 150, including the memory 152, the processor 153, the user interface 154, and the communications interface 155, may be structured the same or similar to the processing circuitry 101 with the memory 102, the processor 103, the user interface 104, and the communications interface 105, respectively. However, the processing circuitry 150 may be configured to perform or control the functionalities of the equipment 50 as described herein. In this regard, for example, the communications interface 155 of the processing circuitry 150 may be configured to establish a communications link with the worksite analysis engine 10 to provide the worksite analysis engine 10 with data, such as, position data for the equipment 50.

In addition to the processing circuitry 150, the equipment 50 may also comprise a position sensor 156, an operation sensor 157, a propulsion and navigation unit 158, and working unit 159. The processing circuitry 150 may be configured to control the operation of the position sensor 156, operation sensor 157, the propulsion and navigation unit 127, and the working unit 159. In this regard, the position sensor 156 may be structured and configured in the same or similar manner as the position sensor 127. However, the position sensor 156 may be configured to generate position data for the equipment 50.

The operation sensor 157 may be a single sensor or a plurality of sensors that monitor and log data regarding the operation of the equipment 50. In this regard, the operation sensor 157 may be configured to monitor and log rotation per minute (RPM) data, fuel quantity and utilization data, gear usage data (e.g., high gear, low gear, reverse), idle time data, and the like. Such data may be collectively referred to as equipment operation data. According to some example embodiments, the equipment operation data may be communicated to the worksite analysis engine 10 for use in compliance analyses by the workflow compliance engine 18.

Additionally, the equipment 50 may include a propulsion and navigation unit 158. The propulsion and navigation unit 158 may include the mechanisms and components configured to move the equipment 50. In this regard, in an example embodiment, the propulsion and navigation unit 158 may comprise motorized wheels, tracks, or the like configured to assist with moving the equipment 50. The propulsion and navigation unit 158 may operably couple with the user interface 154 for driving the equipment transportation vehicle 40 by a crew member. According to some example embodiments, the equipment 50 may include a display 151, which may be, for example, an LCD display. According to some example embodiments, information may be provided to a crew member operating the equipment 50 via the display 151. Such information may be rendered by the processing circuitry 150 on the display 151 in the form of, for example, a determined equipment path for the operator/crew member to follow when using the equipment 50 at the worksite 30.

The equipment 50 may also include a working unit 159. The working unit 159 may be the component or components of the equipment 50 that perform a work action (e.g., cutting, blowing, aerating, spraying, or the like). In this regard, for example, if the equipment 50 is a ride-on lawn mower, the working unit 159 may comprise cutting blades and a deck for mowing turf and the associated control and power systems. If the equipment 50 is a blower, the working unit 159 may comprise a fan, an air-directing nozzle, and the associated control and power systems to support operation of the fan.

Referring now to the block diagram of FIG. 2E, a structural architecture of crew device 60 is provided. Note that the other crew devices in FIG. 1 (e.g., crew device 61) may be the same or similar to crew device 60. The crew device 60 may be a device that worn or carried by a crew member and is configured to track a position of the crew member. Additionally, according to some example embodiments, the crew device 60 may be configured to communicate with or read a tag on a piece of equipment (e.g., equipment 50) to determine a proximity of the equipment and determine that the crew member is operating the equipment. As such, the crew device 60 may clip to a crew member's belt, be affixed to a lanyard, or the like.

The crew device 60 may comprise processing circuitry 160, which may include memory 162, processor 163, user interface 164, and communications interface 165. The processing circuitry 160, including the memory 162, the processor 163, the user interface 164, and the communications interface 165, may be structured the same or similar to the processing circuitry 101 with the memory 102, the processor 103, the user interface 104, and the communications interface 105, respectively. However, the processing circuitry 160 may be configured to perform or control the functionalities of the crew device 60 as described herein. In this regard, for example, the user interface 164 of the processing circuitry 160 may be configured to establish a communications link with the worksite analysis engine 10 to provide the worksite analysis engine 10 with data, such as, position data for the crew device 60 and the associated crew member.

In addition to the processing circuitry 160, the crew device 60 may also comprise a position sensor 166. The processing circuitry 160 may be configured to control the operation of the position sensor 166. In this regard, the position sensor 166 may be structured and configured in the same or similar manner as the position sensor 127. However, the position sensor 166 may be configured to generate position data for crew device 60 and the associated crew member.

Having described the structures of the components of the example system 1, the following provides as description of the functionalities that may be employed by the components of the system 1 while referring to FIG. 1. In this regard, the autonomous vehicle 20 may be deployed near a worksite 30 and may be configured to operate the camera 126 and the position sensor 127 to capture images of the worksite 30 in association with corresponding position coordinates. The propulsion and navigation unit 128 of the autonomous vehicle 20 may be configured, via the processing circuitry 120, to maneuver into positions to capture images to obtain a comprehensive survey of the worksite 30. In this regard, the autonomous vehicle 20 may be configured to capture overlapping images to facilitate matching of the edges of the images by the worksite analysis engine 10 and more specifically the virtual layout generation engine 12 of the worksite analysis engine 10 to generate a virtual layout as further described below. Additionally, the position data corresponding to each of the captured images may also be used to match content of the images when building the virtual layout of the worksite 30.

According to some example embodiments, the autonomous vehicle 20 may be configured to capture images of the same space from different perspective angles. By capturing the images in this manner three-dimensional information may be extracted from the collection of images to determine the size, shape, and placement of objects, other items of interest, and the spatial geography of the items of interest by the virtual layout generation engine 12. Further, topology data may be determined indicating slopes within the landscape of the worksite 30 based on the perspective angles of the captured images.

As such, whether on land or through the air, the autonomous vehicle 20 may navigate the worksite 30 to collect image data comprising images of the worksite 30 with corresponding position coordinates (e.g., a form of position data) for the images. Further, according to some example embodiments, the position coordinates may include orientation coordinates indicating pitch, roll, and yaw, as well as altitude, to be able to define a perspective and perspective angles for the images captured. Additionally, according to some example embodiments, the autonomous vehicle 20 may also collect sensor data (e.g., captured by sensor(s) 129). According to some example embodiments, the image data and/or the sensor data may be provided by the autonomous vehicle 20 for receipt by the worksite analysis engine 10. In this regard, the autonomous vehicle 20 may be configured to wirelessly transmit the image data and/or the sensor data via a network to the worksite analysis engine 10 or, according to some example embodiments, the autonomous vehicle 20 may be configured to store the image data and/or sensor data on, for example, a removable memory (e.g., memory 122 or a component thereof) that may be delivered to the worksite analysis engine 10 for upload.

As mentioned above, the worksite analysis engine 10 may be configured to generate a virtual layout of the worksite 30 based on various data (e.g., image data and sensor data) and generate workflows to optimize maintenance work at the worksite 30 based on the virtual layout, possibly in combination with other data retrieved by the worksite analysis engine 10. In this regard, according to some example embodiments, the worksite analysis engine 10 may be configured to generate the virtual layout via the processing circuitry 101.

In this regard, the virtual layout generation engine 12 may be configured to receive data and generate the virtual layout of the worksite 30 based on the received data. According to some example embodiments, the received data may include image data and/or sensor data captured by the autonomous vehicle 20. Additionally or alternatively, the received data may include geographic data received from the GIS database 70. In this regard, the GIS database 70 may be, for example, a government maintained database of property records indicating surveyed meets and bounds of property plots and associated satellite imagery. Additionally or alternatively, the GIS database 70 may be a commercial database (e.g., a real estate business database) that includes property boundary lines and satellite imagery. According to some example embodiments, the GIS database 70 may include satellite imagery that may be received by the virtual layout generation engine 12 for use in developing the virtual layout. Further, the virtual layout generation engine 12 may also receive data from a topology database 80. Again, the topology database 80 may be a government or commercial database indicated property elevations and topographic contours. The topology database 80 may include data provided as satellite topography.

Accordingly, the virtual layout generation engine 12 may be configured to generate a virtual layout in the form of a geospatial model of the worksite 30 based on one or more of the image data, sensor data, data from the GIS database 70, or data from the topology database 80. With respect to the image data, the virtual layout generation engine 12 may be configured to match edges of the captured images using the content of the images and the corresponding position data to generate the virtual layout in the form of a three-dimensional geospatial model. The virtual layout generation engine 12 may include functionality to identify and classify areas and objects within the virtual layout. To do so, the virtual layout generation engine 12 may evaluate colors, textures, and color and texture transitions within, for example, the image data to identify objects and area boundaries against a comparison object database.

In this regard, the virtual layout generation engine 12 may be configured to identify and classify lawn or turf areas and define boundaries for the lawn or turf areas. Further, the virtual layout generation engine 12 may be configured to identify and classify planting beds and define boundaries for the planting beds. Further, the virtual layout generation engine 12 may be configured to identify and classify structures (e.g., houses, buildings, fences, decks, etc.) and define boundaries for the structures. Additionally, the virtual layout generation engine 12 may be configured to identify and classify pavement areas (e.g., roads, driveways, sidewalks, etc.) and define boundaries for the pavement areas. Also, with respect to vegetation, the virtual layout generation engine 12 may also be configured receive vegetation data and analyze coloration and shapes of, for example, leaves and other vegetation characteristics to identify and classify the types of vegetation (e.g., trees, bushes, turf, annuals, etc.) on the worksite 30 based on the received vegetation data and indicate the placement of the vegetation within virtual layout.

According to some example embodiments, the virtual layout generation engine 12 may also consider human survey information that may be provided to the virtual layout generation engine 12 relating to the worksite 30. The human survey information may indicate spatial information such as the placement of planting beds, structures, pavement areas, and the like. The human survey information may also indicate vegetation types and locations within the worksite 30. According to some example embodiments, the human survey information may be entered into a separate terminal or directly into the worksite analysis engine 10 to be received via the communications interface 105 or the user interface 104, respectively.

Accordingly, the virtual layout may be formed as a geospatial model comprising the topography of the worksite 30 that can be analyzed to assist with equipment path determinations and workflow generation as further described herein. In this regard, the virtual layout may be used to determine distances between the identified and classified objects. As such, the virtual layout may provide a digital representation of the physical worksite 30 at the time that the images used to generate the virtual layout were captured.

According to some example embodiments, the virtual layout may also be generated based on historical virtual layouts for the worksite 30. In this regard, according to some example embodiments, a virtual layout may include a temporal element and the virtual layout may describe the state of the worksite 30 over time. In this regard, snapshot or time captured virtual layouts may be combined to identify changes that have occurred at the worksite 30. For example, a virtual layout that incorporates historical information may indicate vegetation growth (e.g., tree growth or turf growth). Additionally, such a virtual layout may show differences in the landscape of the worksite 30 due to, for example, erosion or degradation of ground cover (e.g., degradation of mulch). Further, the virtual layout may also show differences due to the presence of movable objects such as debris or toys that may be moveable prior to performing worksite maintenance.

As mentioned above, the worksite analysis engine 10 may also include an equipment path generation engine 14. In this regard, the equipment path generation engine 14 may be configured to analyze the virtual layout in combination with other data to determine an efficient and effective equipment path for performing a worksite maintenance task. Data in addition to the virtual layout that may be evaluated and incorporated when determining an equipment path. Such data may include equipment data and crew data. According to some example embodiments, the equipment path may be defined as a direction or pattern of movement for equipment use in an area. However, in some example embodiments, the equipment path may indicate a specific route indicating exact positions for the equipment as the equipment is utilized to complete a task.

The equipment data that may be used to generate an equipment path may include a list of equipment available to be deployed at the worksite 30. Such a list may be an inventory list of the equipment that is present on the equipment transportation vehicle 40. The equipment data may also include equipment attributes for the equipment on the inventory list. Such attributes may indicate, for example, for a ride-on mower, turning radius, deck width, deck height, maximum slope, speed, clipping catch capacity, and the like. For such a ride-on mower, as well as other equipment, the equipment attributes may also include fuel capacity, fuel consumption rate, equipment category (e.g., wheeled, wheeled-motorized, ride-on, hand-carry, or the like), and a work unit action (e.g., mow, trim, blow, aerate, spread fertilizer, hedge trim, saw, or the like).

The crew data may indicate a number of available crew members that may be utilized at the worksite 30. Crew data may also indicate certain qualifications or experience of the individual crew member. For example, the crew data may indicate equipment that a crew member is qualified to use or that the crew member has proven to have a relatively high effectiveness using. Further, the crew data may indicate a classification or rank of a crew member as, for example, a supervisor, a senior crew member, a junior crew member, or the like.

Accordingly, based on the virtual layout and in some instances, the equipment data and the crew data, an equipment path may be generated by the equipment path generation engine 14, via the processing circuitry 101, as an efficient and effective path for implementing selected equipment within the worksite 30. Further, the equipment path generation engine 14 may be configured to generate the equipment path based on the virtual layout, where the virtual layout includes topographic information for analysis in determining the equipment path. Additionally or alternatively, according to some example embodiments, the equipment path may also be based on desired path parameters, such as, for example, a desired striping pattern (e.g., a user-defined striping pattern) for the turf, a desired hedge height or the like. Additionally or alternatively, the equipment path may be generated based on recent weather data. Such weather data may comprise precipitation data and sun exposure data. In this regard, the weather data may, for example, indicate that there has been little precipitation and high sun exposure, and therefore only the shaded areas within the worksite 30 may require mowing and the equipment path may be generated accordingly. Further, for example, the weather data may indicate that substantial precipitation and low sun exposure has occurred recently and therefore low areas of the worksite 30 may be removed from the equipment path for a ride-on mower to prevent ruts in the turf. Additionally or alternatively, the equipment path generation engine 14 may be configured to generate the equipment path based on the virtual layout and work zones defined within the worksite 30, as further described below. In this regard, for example, the equipment path may be generated for work within a particular work zone, and thus, the equipment path may be, in some instances, limited to routing the crew member and the associated equipment within the work zone.

If, for example, the equipment is a ride-on mower, the equipment path may indicate the path that the mower should move from the equipment transportation vehicle 40 to the worksite 30, through the worksite 30 to perform mowing, and return to the equipment transportation vehicle 40. The equipment path may be determined based on the equipment data to determine areas from the virtual layout where, for example, a ride-on mower may not have access because of sloped terrain, a small gate, an area being smaller than the deck width, turning radius limitations, or the like. Similarly, for example, if the equipment is a trimmer, the equipment path generation engine 14 may indicate a path that a crew member may move from the equipment transportation vehicle 40 to each area that needs to be trimmed and return to the equipment transportation vehicle 40. According to some example embodiments, some equipment paths may be dependent upon other equipment paths or the capabilities of other equipment. In this regard, the equipment path for the trimmer may be dependent upon the accessibility of the ride-on mower to all areas of the worksite 30, and there may be areas that are not accessible to the ride-on mower, and therefore the equipment path for the trimmer may include some or all of those areas that are not accessible to the ride-on mower. Further, according to some example embodiments, the equipment path may also be based on a requirement to return to a location during completion of a task. In this regard, for example, if mowing is being performed such that yard clippings are collected and removed, then the equipment path may be defined to return to the equipment transportation vehicle 40 to empty the clipping catch at an efficient point in the equipment path based on, for example, the clipping catch capacity of the equipment.

According to some example embodiments, the equipment path may be provided (e.g., transmitted or otherwise delivered) to, for example, the equipment 50. Upon receiving the equipment path generated by the equipment path generation engine 14, the equipment 50 may be configured to store the equipment path in the memory (e.g., memory 142) of the equipment 50. When the crew member is prepared to undertake the task associated with the equipment 50 (e.g., mow the turf portions of the worksite 30 or trim determined areas of the worksite 30), the crew member may retrieve the equipment path for output via the user interface 144, or, more specifically, via a display of the user interface 144. As such, the equipment path may be output to the crew member to enable the crew member to follow the determined equipment path during execution of the task.

According to some example embodiments, the worksite analysis engine 10 may also be configured to implement a crew workflow generation engine 16. In this regard, the crew workflow generation engine 16 may be configured to generate a workflow for the crew members servicing the worksite 30. The workflow may comprise a list (e.g., a sequenced list) of workflow assignments to be performed by a crew member when servicing the worksite 30. A workflow assignment may comprise a task, equipment to perform the task, and an equipment path (as described above) for performing the task. In this regard, for example, a workflow assignment may include a task of mowing, equipment for the task may be a ride-on mower, and the equipment path may be defined as provided by the equipment path generation engine 14. Additionally, according to some example embodiments, a workflow assignment may also indicate a work zone for the task.

As mentioned above, the crew workflow generation engine 16 may be configured to analyze the virtual layout to determine work zones within the worksite 30. To determine a work zone, the crew workflow generation engine 16 may be configured to determine sub-boundaries within the worksite 30 where, for example, topology changes (e.g., areas with increased or decreased slope), access changes (e.g., a fenced in area), pavement boundaries, worksite boundaries, or the like. Work zones may also be defined based on the equipment needed to service, for example, the vegetation within the work zone. For example, a work zone may be defined by an area that has a steep grade because a ride-on mower may not be able to mow the area and a push mower may be needed to mow that area. **In** another example, a work zone may be defined in association with a densely treed area where only a trimmer can be used to maintain grasses that may grow in such an area. The crew workflow generation engine 16 may therefore define the work zones as piece-wise geographic regions within the worksite 30. As such, for example, boundaries of the work zones may be determined based on physical changes indicated in the virtual layout (e.g., a change from turf to pavement), a need for a different piece of equipment to maintain the area, or the like.

Whether the workflow is defined with or without work zones, the workflow may be a maintenance execution plan for each member to complete, for example, in unison upon beginning the maintenance effort at a worksite 30. The workflow and the workflow assignments therein may be determined based on the virtual layout, the equipment data, and the crew data. Additionally, the workflow and the workflow assignments therein may, according to some example embodiments, be based on the defined work zones for the worksite 30. Additionally, the workflow and the workflow assignments therein may also be based on the weather data (e.g., including precipitation data, sun exposure data, or the like) as described above, or sensor data. According to some example embodiments, the workflow and the workflow assignment therein may be defined based on safety criteria such that crew members may be located, for example, in different work zones at the same time to reduce interaction that increases the likelihood of a safety incident. As mentioned above, the equipment selected for a task within the workflow may be determined based on the type of task and the type of, for example, vegetation being maintained.

Additionally, for example, a mower provided on the equipment list of the equipment data may be selected for use when maintaining turf. However, according to some example embodiments, if the task could be completed more efficiently by a piece of equipment that is not on the equipment list, the crew workflow generation engine 16 may be configured to recommend purchase of a new piece of equipment, based on the equipment data and the virtual layout, that could more efficiently complete the task. Such information regarding equipment that is not in the equipment list may be retrieved, for example, from other sources of information such as websites and databases of equipment information provided by equipment sellers. According to some example embodiments, the crew workflow generation engine 16 may be configured to determine an efficiency payback associated with the purchase of the new equipment that indicates when use of the new equipment at the worksite 30 (and elsewhere) may increase profits due to the efficiency increase resulting in payback in the amount of the purchase price over a determined period of time.

According to some example embodiments, the crew workflow generation engine 16 may also analyze the virtual layout to determine an efficient location to park the equipment transportation vehicle 40. The determination of the location of the equipment transportation vehicle 40 may also be a factor when generating equipment paths as described above. According to some example embodiments, the determined location of the equipment transportation vehicle 40 may be a location that minimizes travel distances of equipment to the worksite 30. As such, the workflow assignment and tasks of the workflow may also be factors evaluated by the crew workflow generation engine 16 when determining a location for the equipment transportation vehicle 40 and for the generation of equipment paths.

Additionally, the worksite analysis engine 10 may also include a workflow compliance engine 18. The workflow compliance engine 18 may be configured to evaluate actual execution of the workflow by the crew to determine compliance with the workflow. In this regard, according to some example embodiments, a workflow compliance score may be calculated based on the crew's execution of the workflow.

Workflow compliance may be performed based on tracked data (e.g., equipment operation data and equipment position data) regarding the utilization and location of the equipment by the crew with respect to the workflow. To track the actual activities of the crew, the workflow compliance engine 18 may receive position data from the equipment position sensor 156 and the crew device position sensor 166. Additionally, the workflow compliance engine 18 may collect data regarding operation of the equipment from data captured by the operation sensor 157 of the equipment 50.

Based on the position data and operation data captured by the equipment 50 and the crew device 60 and received by the workflow compliance engine 18, workflow compliance analyses may be performed, for example, with respect to the determined equipment path indicated in the workflow. In this regard, equipment position data captured by the equipment 50 may be compared to the generated equipment path to determined differences between the actual path taken and the proposed equipment path. Such differences may be a factor in a compliance score. Additionally, compliance analysis may also be performed with respect to the type of equipment being used for a task within the workflow. For example, the workflow may indicate that a push mower is to be used for mowing a particular work zone, but the operation data and the position data of the ride-on mower may indicate that the push mower was not used and the ride-on mower was used, which would be out of compliance with the workflow.

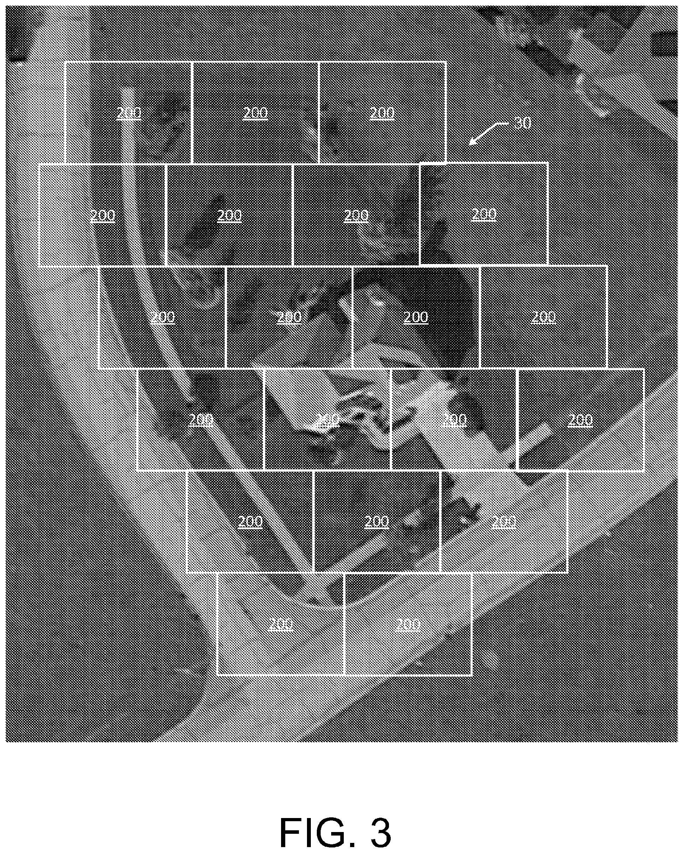

Having described various aspects of some example embodiments, the following describes an example implementation of the system 1 in the context of an example worksite 30 that is a residential worksite for vegetation maintenance. In this regard, with reference to FIG. 3, an overhead view of a worksite 30 is shown. Image data of the worksite 30 may be captured by the autonomous vehicle 20 as indicated by image captures 200 across the entirety of the worksite 30. While FIG. 3 shows images captured in a two dimensional plane above the worksite 30, it is understood that the autonomous vehicle 20 may be configured to capture image data at a number of different perspectives to facilitate generation of a virtual layout of the worksite 30 in three dimensions as a geospatial model that includes topographic information.

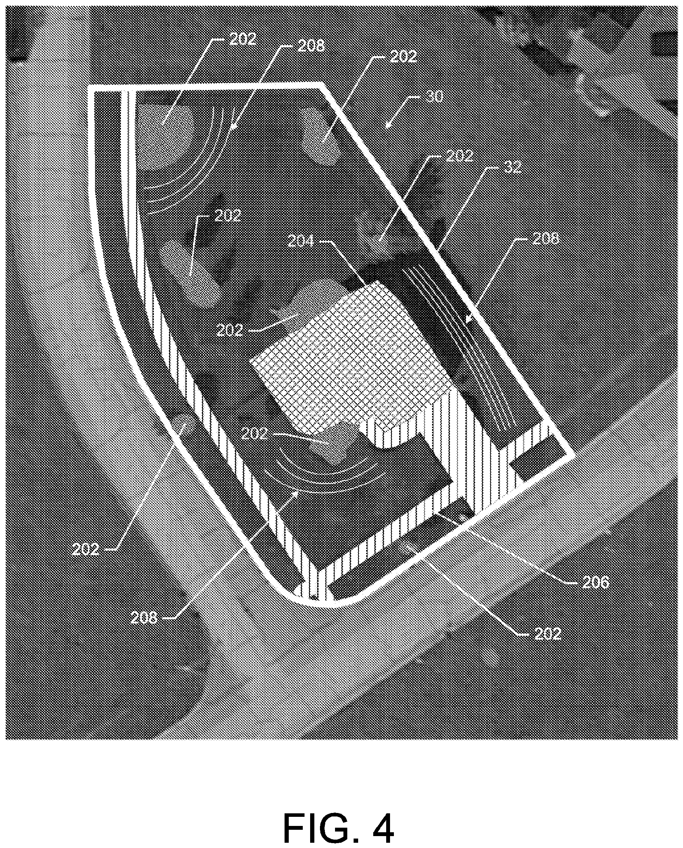

Now referring to FIG. 4, the worksite 30 is shown as an example virtual layout that may be generated by the virtual layout generation engine 12. In this regard, a worksite boundary 32 may be generated to define the extents of the worksite 30, for example, based on GIS data or the like as described herein. Additionally, the virtual layout includes areas identified and classified as planting beds 202, which may include plants, shrubs, trees, or the like. Additionally, the virtual layout includes an area identified and classified as a structure 204 in the form of the house. Further, the virtual layout includes an area identified and classified as pavement 206 which includes the areas of the driveway and the sidewalk. The virtual layout also includes contour lines 208 indicating sloped areas of the worksite 30 that have been determined based on topographic data.

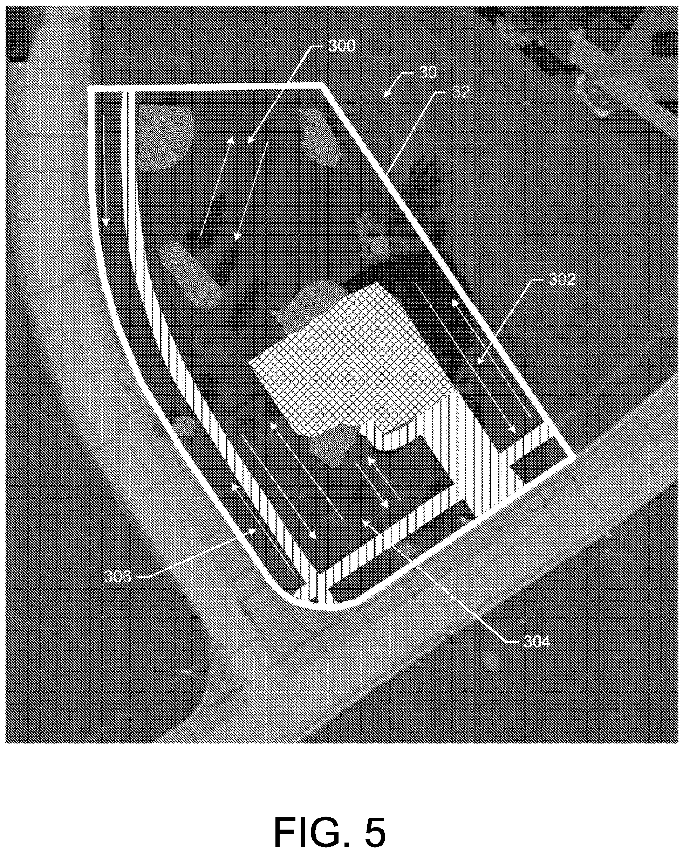

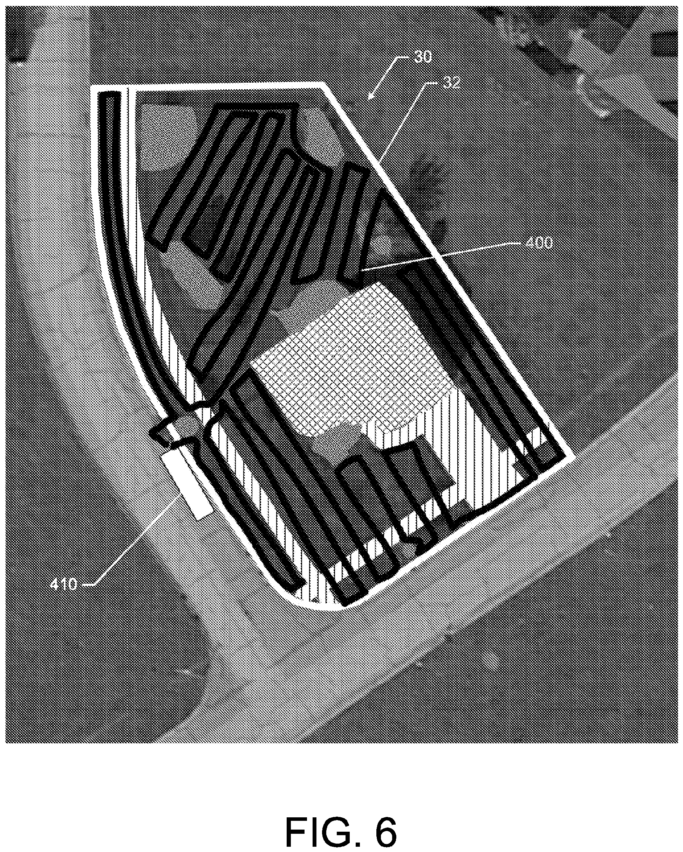

Now referring to FIG. 5, equipment path generation engine 14 has analyzed the virtual layout with equipment data and determined equipment paths. In this regard, the equipment paths may be determined for different areas of the worksite 30 based on, for example, the type of equipment to be used and the topography of the area. In this example scenario, the equipment paths 300, 302, 304, and 306 are defined. The equipment paths 300, 302, 304, and 306 may be defined directions or patterns of movement for use by a crew member operating, fro example, a ride-on mower in accordance with the equipment paths 300, 302, 304, and 306. Alternatively, FIG. 6 illustrates a more specifically defined equipment path 400. In this regard, the equipment path 400 may also be for a ride-on mower, but the equipment path 400 indicates the exact location for movement of the ride-on mower throughout the mowing task. Additionally, the location of an equipment transportation vehicle 410 is shown. In this regard, the crew workflow generation engine 16 may have analyzed the virtual layout and determined an efficient location for parking the equipment transportation vehicle 410 for beginning and ending the equipment path for the task of mowing using a ride-on mower, as well as other tasks in the workflow.

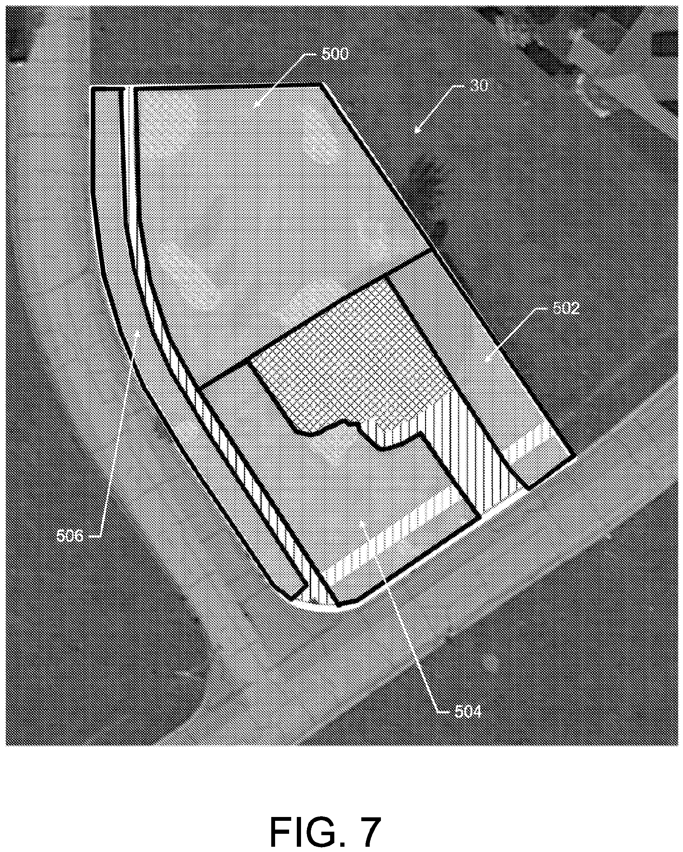

As shown in FIG. 7, the worksite 30 may be divided by the crew workflow generation engine 16 into a plurality of work zones. In this regard, the work zones 500, 502, 504, and 506 have been defined, in addition to a work zone associated with the paved area 206. As can be seen, the work zones have been defined with boundaries based on the boundaries of the worksite 30 and pavement boundaries in some instances. The boundaries between work zone 502 and 500, and work zone 504 and 500 may be based on, for example, the presence of a structure in the form of a fence.

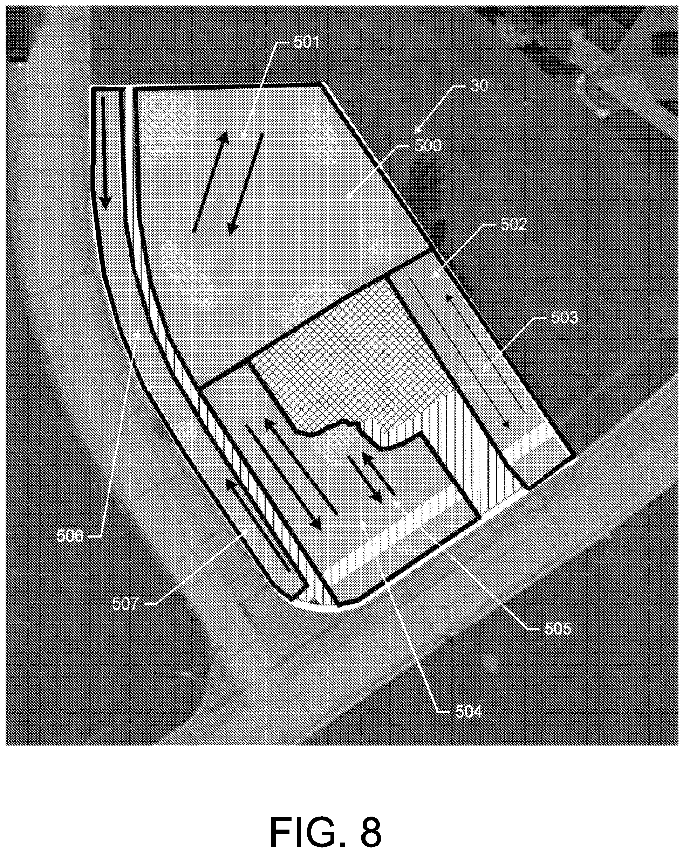

Additionally, as described above with respect to the work zones, equipment paths may be defined within the context of the work zones individually, as shown in FIG. 8. In this regard, equipment paths 501, 505, and 507 may be defined within each of the work zones 500, 504, and 506, respectively, as directions or patterns of movement, for example, for a ride-on mower completing the task of mowing within each of the work zones 500, 502, and 504. However, in an example scenario, due to the slope of the terrain in work zone 502, a push mower is designated as the equipment for completing the task of mowing in the work zone 502 in accordance with the equipment path 503.

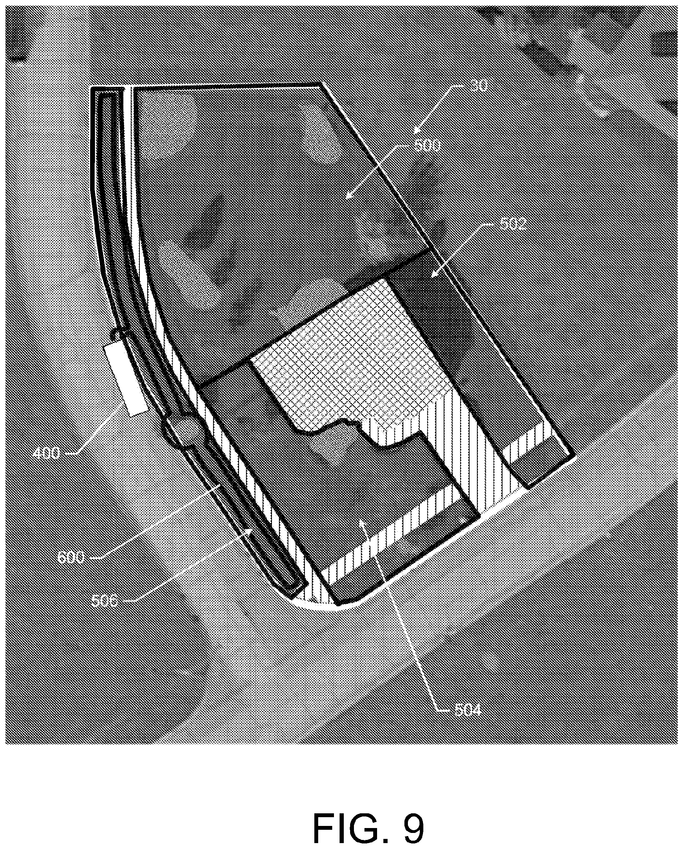

Based on the work zones 500, 502, 504, and 506 defined in FIGs. 7 and 8, an example workflow may be generated by the crew workflow generation engine 16 as provided in Table 1 below. The example workflow of Table 1 includes work assignments described with respect to FIGs. 9 through 13.

**Table 1**

| Workflow - Worksite 30 | | | | | | | | | |
|---|---|---|---|---|---|---|---|---|---|
| Crew Member 1 | | | | | Crew Member 2 | | | | |
| Work Assignment | Task | Equipment | Work Zone | Path | Work Assignment | Task | Equipment | Work Zone | Path |
| 1a | Mow/ Clippings | Ride-On | 506 | 600 | 1b | Trim | Trimmer | 502 | N/A |
| 2a | Mow/ Clippings | Ride-On | 500 | 602 | 2b | Trim | Trimmer | 504 | N/A |
| 3a | Mow/ Clippings | Ride-On | 504 | 604 | 3b | Trim | Trimmer | 506 | N/A |
| 4a | Mow/ Clippings | Push Mower | 502 | 606 | 4b | Trim | Trimmer | 500 | N/A |
| 5a | Blow | Blower | Pavement | 608 | 5b | Prune | Pruners | 500 | N/A |

As shown in the workflow of Table 1, the crew workflow generation engine 16 has generated a workflow for the worksite 30 using two crew members (i.e., crew member 1 and crew member 2). The work assignments in the same row are scheduled to be performed at the same time and are planned to require a similar amount of time to complete. As shown in the Table 1, each workflow assignment within the workflow may be defined by a task, equipment, work zone, and equipment path.

With reference to FIG. 9, the equipment path 600 for workflow assignment 1a is shown. Additionally, in FIG. 9, the crew workflow generation engine 16 has also determined an efficient location of for parking the equipment transportation vehicle 400, as shown. Again with respect to workflow assignment 1a, crew member 1 is assigned to a task of mowing with a clipping catch using the equipment being a ride-on mower in work zone 506 using equipment path 600. As shown in FIG. 9, the equipment path 600 begins and ends at the equipment transportation vehicle 400 to provide for emptying the clipping catch at the equipment transportation vehicle 400. Meanwhile, crew member 2 is assigned workflow assignment 1b (to be performed at the same time as workflow assignment 1a) of trimming, using the trimmer, in work zone 502. Notably, crew member 1 and crew member 2 are not assigned to work in the same work zone at the same time for safety purposes. While the equipment path generation engine 14 may have generated an equipment path for trimming, in this example workflow the equipment path for the trimming tasks are not shown.

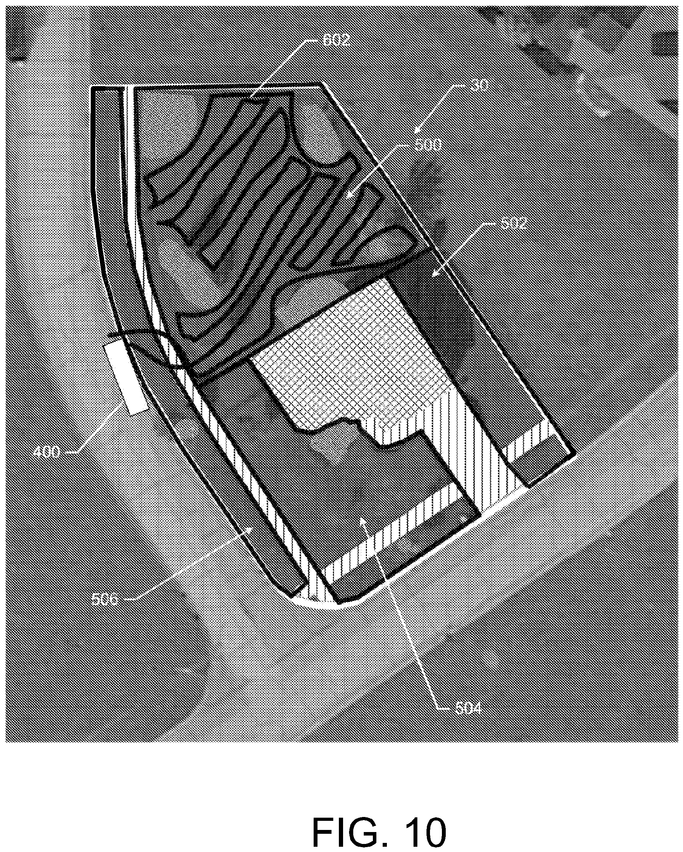

Subsequently, and now referring to FIG. 10, crew member 1 is assigned to workflow assignment 2a, which is to mow with a clipping catch using the ride-on mower in work zone 500 using equipment path 602. As shown in FIG. 10, the equipment path 602 again begins and ends at the equipment transportation vehicle 400 to provide for emptying the clipping catch at the equipment transportation vehicle 400. Meanwhile, crew member 2 is assigned workflow assignment 2b (to be performed at the same time as workflow assignment 2a) of trimming, using the trimmer, in work zone 504.

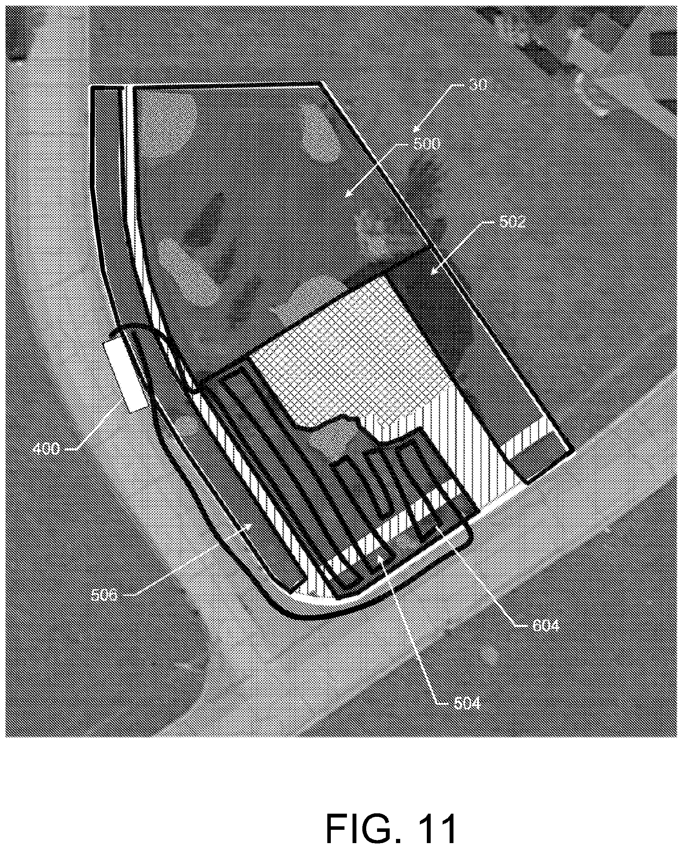

Now referring to FIG. 11, crew member 1 is assigned to workflow assignment 3a, which is to mow with a clipping catch using the ride-on mower in work zone 504 using equipment path 604. As shown in FIG. 11, the equipment path 604 again begins and ends at the equipment transportation vehicle 400 to provide for emptying the clipping catch at the equipment transportation vehicle 400. Meanwhile, crew member 2 is assigned workflow assignment 3b (to be performed at the same time as workflow assignment 3a) of trimming, using the trimmer, in work zone 506.

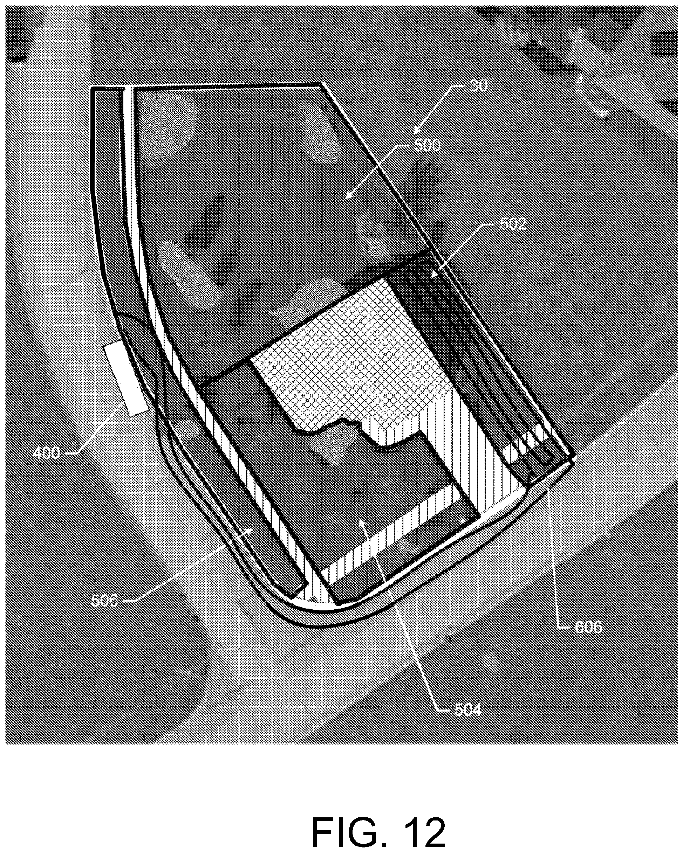

Now referring to FIG. 12, crew member 1 is assigned to workflow assignment 4a, which is to mow with a clipping catch using the push mower in work zone 502 using equipment path 606. As shown in FIG. 12, the equipment path 606 again begins and ends at the equipment transportation vehicle 400 to provide for emptying the clipping catch at the equipment transportation vehicle 400. Meanwhile, crew member 2 is assigned workflow assignment 4b (to be performed at the same time as workflow assignment 4a) of trimming, using the trimmer, in work zone 500.

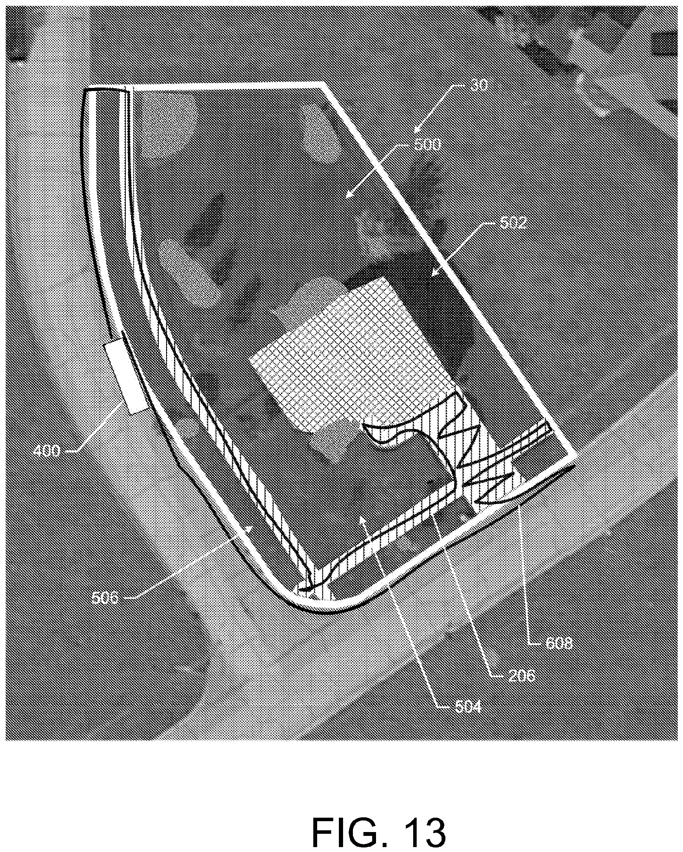

Now referring to FIG. 13, crew member 1 is assigned to workflow assignment 5a, which is to blow using the blower in the pavement work zone defined at 206 using equipment path 608. As shown in FIG. 13, the equipment path 608 again begins and ends at the equipment transportation vehicle 400 to provide for removing and returning the blower to the equipment transportation vehicle 400. Meanwhile, crew member 2 is assigned workflow assignment 5b (to be performed at the same time as workflow assignment 5a) of pruning, using the pruners, in work zone 500.

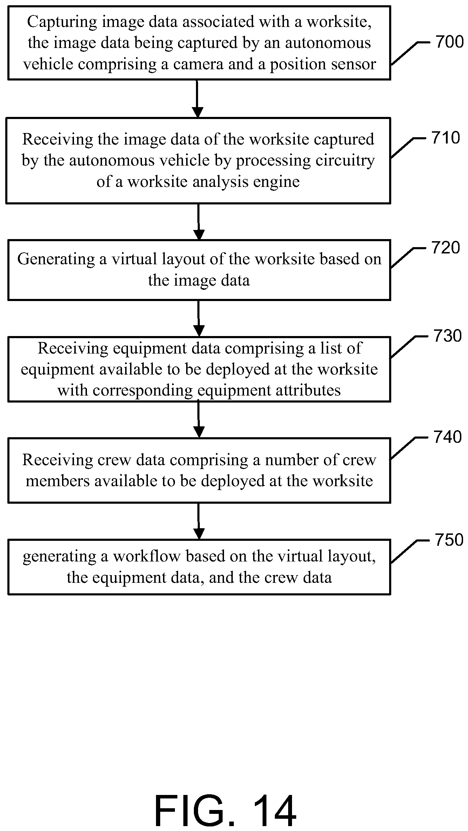

Now with reference to the flow chart of FIG. 14, an example method for generating a workflow is provided in accordance with some example embodiments. In this regard, the example method may include, at 700, capturing image data associated with a worksite, where the image data is captured by an autonomous vehicle (e.g., autonomous vehicle 20) comprising a camera and a position sensor. The autonomous vehicle may be configured to operate the camera and position sensor to capture the image data with corresponding position coordinates. According to some example embodiments, sensor data may also be measured and otherwise captured by the autonomous vehicle. The example method may further include, at 710, receiving the image data (and in some cases sensor data) of the worksite captured by the autonomous vehicle by processing circuitry (e.g., processing circuitry 101) of a worksite analysis engine. Additionally, at 720, the example method may include generating a virtual layout of the worksite based on the image data (and in some cases sensor data), by the processing circuitry. The example method may also include, at 730, receiving equipment data comprising a list of equipment available to be deployed at the worksite with corresponding equipment attributes, and at 740, receiving crew data comprising a number of crew members available to be deployed at the worksite. Further, at 750, the example method may include generating a workflow based on the virtual layout, the equipment data, and the crew data. In this regard, the workflow may comprise workflow assignments for each crew member at the worksite, and each workflow assignment may indicate a task, equipment to perform the task, and an equipment path for the task.

According to some example embodiments, the image data may include perspective angles corresponding to the images captured, and the example method may further comprise generating the virtual layout as a geospatial model of the worksite including topographic data based on the image data comprising the perspective angles. Additionally, the example method may comprise generating the equipment path based on the virtual layout comprising the topographic data.

Further, according to some example embodiments, the example method may, additionally or alternatively comprise determining a plurality of work zones within the worksite based on the virtual layout, the equipment data, and the crew data, and generating the workflow based on the work zones. In this regard, each workflow assignment may also indicate a work zone for a task. Additionally or alternatively, the example method may further comprise generating the equipment path based on the plurality of work zones. Additionally or alternatively, the equipment attributes for the equipment data may include information indicating a deck width and a turn radius. Additionally or alternatively, the example method may comprise generating the virtual layout based on vegetation data indicating types of vegetation within the worksite. Additionally or alternatively, the example method may further comprise generating the workflow based on weather data comprising precipitation data and sun exposure data, or sensor data. Additionally or alternatively, the example method may further comprise generating the virtual layout based on historical image data. In this regard, the example method may further comprise identifying moveable objects within the virtual layout based on differences between the historical image data and the image data captured by the autonomous vehicle.

Additionally or alternatively, the example method may further comprise determining compliance with the workflow based on the equipment position data, the equipment position data being captured by an equipment position sensor of the equipment. In this regard, according to some example embodiments, the equipment may be vegetation management equipment. According to some example embodiments, the equipment (e.g., the vegetation management equipment) may comprise a user interface configured to provide the equipment path to a crew member. Additionally or alternatively, the example method may further comprise generating the equipment path based on the virtual layout comprising a user-defined turf striping pattern. Further, the example method may comprise determining a parking location for an equipment transportation vehicle based on the virtual layout and the workflow. Additionally or alternatively, the example method may further comprise generating an equipment purchase recommendation based on the virtual layout and the equipment data.

## Claims

1. **A system** comprising:
an autonomous vehicle (20) comprising a camera (126) and a position sensor (127), the autonomous vehicle (20) being configured to operate the camera (126) and position sensor (127) to capture image data associated with a worksite (30), the image data comprising images of the worksite (30) with corresponding position coordinates;
and
the worksite analysis engine (10) comprising processing circuitry (101), the processing circuitry (101) being configured to:
receive the image data of the worksite (30) captured by the autonomous vehicle (20);
generate a virtual layout of the worksite (30) based on the image data; receive equipment data comprising a list of equipment available to be deployed at the worksite (30) with corresponding equipment attributes; receive crew data comprising a number of crew members available to be deployed at the worksite (30);
generate a workflow based on the virtual layout, the equipment data, and the crew data, the workflow comprising workflow assignments for each crew member at the worksite (30), each workflow assignment indicating a task, equipment to perform the task, and an equipment path for the task;
**characterized in that** the system further comprises: at least one equipment (50, 51) comprising processing circuitry (150) configured to establish a communications link with a worksite analysis engine (10) of the system to provide the worksite analysis engine (10) with position data and operation data for the equipment (50, 51);
a crew device (60, 61) configured to track position of a crew member and configured to communicate with or read a tag on the equipment (50, 51) to determine a proximity of the equipment (50, 51) and to determine that the crew member is operating the equipment (50, 51) and comprising processing **circuitry** (160) configured to establish a communications link with the worksite analysis engine (10) to provide the worksite analysis engine (10) with position data of the crew device (60, 61);
and wherein the processing circuitry (101) is further configured to:
evaluate actual execution of the workflow by the crew based on the position data and operation data captured by the at least one equipment (50, 51) and the at least one crew device (60, 61).

2. The system of claim 1, wherein the image data includes perspective angles corresponding to the images;
wherein the processing circuitry (101) is configured to generate the virtual layout as a geospatial model of the worksite (30) including topographic data based on the image data comprising the perspective angles; and
wherein the processing circuitry (101) is configured to generate the equipment path based on the virtual layout comprising the topographic data.

3. The system of claim 1, wherein the processing circuitry (101) is further configured to determine a plurality of work zones (500,...,506) within the worksite (30) based on the virtual layout, the equipment data, and the crew data; and
wherein the processing circuitry (101) is configured to generate the workflow based on the work zones (500,...,506), each workflow assignment also indicating a work zone (500,...,506) for a task.

4. The system of claim 3, wherein processing circuitry (101) is configured to generate the equipment path based on the plurality of work zones (500,...,506).

5. The system of claim 1, wherein the equipment attributes for the equipment data include information indicating a deck width and a turn radius.

6. The system of claim 1, wherein the autonomous vehicle (20) comprises a sensor configured to generate sensor data for integration with the image data at the worksite analysis engine (10).

7. The system of claim 1, wherein the processing circuitry (101) is configured to generate the workflow based on weather data comprising precipitation data and sun exposure data.

8. The system of claim 1, wherein the processing circuitry (101) is configured to generate the virtual layout based on historical image data, and wherein the processing circuitry (101) is configured to identify moveable objects within the virtual layout based on differences between the historical image data and the image data captured by the autonomous vehicle (20).

9. The system of claim 1, further comprising a vegetation management equipment, the vegetation management equipment comprising an equipment position sensor (156) configured to capture an equipment position to generate equipment position data; and
wherein the processing circuitry (101) is further configured to determine compliance with the workflow based on the equipment position data.

10. The system of claim 9, wherein the vegetation management equipment further comprises a user interface (154) configured to provide the equipment path to a crew member.

11. The system of claim 1, wherein the processing circuitry (101) is configured to generate the equipment path based on the virtual layout comprising a user-defined turf striping pattern.

12. **The system** of claim 1, wherein the processing circuitry (101) is further configured to determine a parking location for an equipment transportation vehicle (40) based on the virtual layout and the workflow.

13. The system of claim 1, wherein the processing circuitry (101) is further configured to generate an equipment purchase recommendation based on the virtual layout and the equipment data.

14. A computer-implemented method comprising:
capturing image data associated with a worksite (30), the image data being captured by an autonomous vehicle (20) comprising a camera (126) and a position sensor (127), the autonomous vehicle (20) being configured to operate the camera (126) and position sensor (127) to capture the image data with corresponding position coordinates;
receiving the image data of the worksite (30) captured by the autonomous vehicle (20) by processing circuitry (101) of a worksite analysis engine (10); generating a virtual layout of the worksite (30) based on the image data by the processing circuitry (101);
receiving equipment data comprising a list of equipment available to be deployed at the worksite (30) with corresponding equipment attributes; generating a workflow based on the virtual layout, the equipment data, and the crew data, the workflow comprising workflow assignments for each crew member at the worksite (30), each workflow assignment indicating a task, equipment (50, 51) to perform the task, and an equipment path for the task; **characterized by**
receiving position data and operation data for the equipment (50, 51) from processing circuitry (150) of at least one equipment (50, 51) configured to establish a communications link with the worksite analysis engine (10);
receiving crew data comprising a number of crew members available to be deployed at the worksite (30);
**receiving** position data of crew devices (60, 61) associated with the crew members;
and
evaluating actual execution of the workflow by the crew based on the position data and operation data for the equipment (50, 51) and crew members.

15. The method of claim 14, wherein the image data includes perspective angles corresponding to the images;
wherein the method further comprises:
generating the virtual layout as a geospatial model of the worksite (30) including topographic data based on the image data comprising the perspective angles; and
generating the equipment path based on the virtual layout comprising the topographic data.

## Patentansprüche

1. Ein System, umfassend:
ein autonomes Fahrzeug (20), das eine Kamera (126) und einen Positionssensor (127) umfasst, wobei das autonome Fahrzeug (20) ausgebildet ist, um die Kamera (126) und den Positionssensor (127) zu betreiben, um mit einer Baustelle (30) verbundene Bilddaten zu erfassen, wobei die Bilddaten Bilder der Baustelle (30) mit entsprechenden Positionskoordinaten umfassen;
und
die Baustellenanalysemaschine (10) umfassend eine Verarbeitungsschaltung (101), wobei die Verarbeitungsschaltung (101) ausgebildet ist, um:
die vom autonomen Fahrzeug (20) erfassten Bilddaten der Baustelle (30) zu empfangen;
auf der Grundlage der Bilddaten ein virtuelles Layout der Baustelle (30) zu erstellen;
Ausrüstungsdaten zu empfangen, die eine Liste von Ausrüstungen umfassen, die auf der Baustelle (30) eingesetzt werden können, mit entsprechenden Ausrüstungsattributen;
Mitarbeiterdaten zu empfangen, die eine Anzahl von Mitarbeitern umfassen, die auf der Baustelle (30) eingesetzt werden können;
Erzeugen eines Arbeitsablaufs auf der Grundlage des virtuellen Layouts, der Ausrüstungsdaten und der Mitarbeiterdaten, wobei der Arbeitsablauf Arbeitsablaufzuweisungen für jedes Mitarbeiter-Mitglied an der Baustelle (30) umfasst, wobei jede Arbeitsablaufzuweisung eine Aufgabe, eine Ausrüstung zur Durchführung der Aufgabe und einen Ausrüstungspfad für die Aufgabe angibt; **dadurch gekennzeichnet, dass** das System ferner umfasst: mindestens eine Ausrüstung (50, 51), die eine Verarbeitungsschaltung (150) umfasst, die ausgebildet ist, um eine Kommunikationsverbindung mit einer Baustellenanalysemaschine (10) des Systems herzustellen, um die Baustellenanalysemaschine (10) mit Positionsdaten und Betriebsdaten für die Ausrüstung (50, 51) zu versorgen;
eine Mitarbeitervorrichtung (60, 61), die ausgebildet ist, um die Position eines Mitarbeiters zu verfolgen, und die ausgebildet ist, um mit einem Etikett an der Ausrüstung (50, 51) zu kommunizieren oder es zu lesen, um eine Nähe der Ausrüstung (50, 51) zu bestimmen und um zu bestimmen, dass swe Mitarbeiter die Ausrüstung (50, 51) bedient, und die eine Verarbeitungsschaltung (160) umfasst, die ausgebildet ist, um eine Kommunikationsverbindung mit der Baustellenanalysemaschine (10) herzustellen, um die Baustellenanalysemaschine (10) mit Positionsdaten der Mitarbeitervorrichtung (60, 61) zu versorgen;
und wobei die Verarbeitungsschaltung (101) ferner ausgebildet ist, um:
die tatsächliche Ausführung des Arbeitsablaufs durch die Mitarbeiter auf der Grundlage der Positionsdaten und der Betriebsdaten, die von der mindestens einen Ausrüstung (50, 51) und der mindestens einen Mitarbeitervorrichtung (60, 61) erfasst wurden, zu bewerten.

2. System nach Anspruch 1, wobei die Bilddaten perspektivische Winkel enthalten, die den Bildern entsprechen
wobei die Verarbeitungsschaltung (101) ausgebildet ist, um das virtuelle Layout als ein georäumliches Modell der Baustelle (30) einschließlich topographischer Daten auf der Grundlage der Bilddaten zu erzeugen, die die perspektivischen Winkel umfassen; und
wobei die Verarbeitungsschaltung (101) ausgebildet ist, um den Pfad der Ausrüstung auf der Grundlage des virtuellen Layouts zu erzeugen, das die topographischen Daten umfasst.

3. System nach Anspruch 1, wobei die Verarbeitungsschaltung (101) ferner ausgebildet ist, um eine Vielzahl von Arbeitsbereichen (500, ..., 506) innerhalb der Baustelle (30) auf der Grundlage des virtuellen Layouts, der Ausrüstungsdaten und der Mitarbeiterdaten zu bestimmen; und
wobei die Verarbeitungsschaltung (101) ausgebildet ist, den Arbeitsablauf auf der Grundlage der Arbeitsbereiche (500, ..., 506) zu erzeugen, wobei jede Arbeitsablaufzuweisung auch einen Arbeitsbereich (500, ..., 506) für eine Aufgabe angibt.

4. System nach Anspruch 3, wobei die Verarbeitungsschaltung (101) ausgebildet ist, den Pfad der Ausrüstung auf der Grundlage der mehreren Arbeitsbereiche (500,..., 506) zu erzeugen.

5. System nach Anspruch 1, wobei die Ausrüstungsattribute für die Ausrüstungsdaten Informationen enthalten, die eine Deckbreite und einen Wenderadius angeben.

6. System nach Anspruch 1, wobei das autonome Fahrzeug (20) einen Sensor umfasst, der ausgebildet ist, Sensordaten zur Integration mit den Bilddaten in der Baustellenanalysemaschine (10) zu erzeugen.

7. System nach Anspruch 1, wobei die Verarbeitungsschaltung (101) ausgebildet ist, um den Arbeitsablauf auf der Grundlage von Wetterdaten zu erzeugen, die Niederschlagsdaten und Sonnenexpositionsdaten umfassen.

8. System nach Anspruch 1, wobei die Verarbeitungsschaltung (101) ausgebildet ist, um das virtuelle Layout auf der Grundlage historischer Bilddaten zu erzeugen, und wobei die Verarbeitungsschaltung (101) ausgebildet ist, um bewegliche Objekte innerhalb des virtuellen Layouts auf der Grundlage von Unterschieden zwischen den historischen Bilddaten und den von dem autonomen Fahrzeug (20) erfassten Bilddaten zu identifizieren.

9. System nach Anspruch 1, das ferner eine Vegetationsmanagementausrüstung umfasst, wobei die Vegetationsmanagementausrüstung einen Positionssensor (156) für die Ausrüstung umfasst, der ausgebildet ist, um eine Position der Ausrüstung zu erfassen, um Positionsdaten für die Ausrüstung zu erzeugen; und
wobei die Verarbeitungsschaltung (101) ferner ausgebildet ist, um die Einhaltung des Arbeitsablaufs auf der Grundlage der Positionsdaten der Ausrüstung zu bestimmen.

10. System nach Anspruch 9, wobei die Ausrüstung für das
Vegetationsmanagement ferner eine Benutzerschnittstelle (154) umfasst, die ausgebildet ist, um den Pfad der Ausrüstung für einen Mitarbeiter bereitzustellen.

11. System nach Anspruch 1, wobei die Verarbeitungsschaltung (101) ausgebildet ist, um den Pfad für die Ausrüstung auf der Grundlage des virtuellen Layouts zu erzeugen, das ein benutzerdefiniertes Rasenstreifenmuster umfasst.

12. System nach Anspruch 1, wobei die Verarbeitungsschaltung (101) ferner ausgebildet ist, um auf der Grundlage des virtuellen Layouts und des Arbeitsablaufs einen Parkplatz für ein Transportfahrzeug (40) für Ausrüstung zu bestimmen.

13. System nach Anspruch 1, wobei die Verarbeitungsschaltung (101) ferner ausgebildet ist, um auf der Grundlage des virtuellen Layouts und der Ausrüstungsdaten eine Kaufempfehlung für die Ausrüstung zu erzeugen.

14. Ein computer-implementiertes Verfahren, umfassend:
Erfassen von Bilddaten, die einer Baustelle (30) zugeordnet sind, wobei die Bilddaten durch ein autonomes Fahrzeug (20) erfasst werden, das eine Kamera (126) und einen Positionssensor (127) umfasst, wobei das autonome Fahrzeug (20) ausgebildet ist, die Kamera (126) und den Positionssensor (127) zu betreiben, um die Bilddaten mit entsprechenden Positionskoordinaten zu erfassen;
Empfangen der Bilddaten der Baustelle (30), die von dem autonomen Fahrzeug (20) erfasst wurden, durch eine Verarbeitungsschaltung (101) einer Baustellenanalysemaschine (10);
Erzeugung eines virtuellen Layouts der Baustelle (30) auf der Grundlage der Bilddaten durch die Verarbeitungsschaltung (101);
Empfang von Ausrüstungsdaten, die eine Liste von Ausrüstungen umfassen, die auf der Baustelle (30) eingesetzt werden können, mit entsprechenden Ausrüstungsattributen;
Erzeugen eines Arbeitsablaufs auf der Grundlage des virtuellen Layouts, der Ausrüstungsdaten und der Mitarbeiterdaten, wobei der Arbeitsablauf Arbeitsablaufzuweisungen für jeden Mitarbeiter an der Baustelle (30) umfasst, wobei jede Arbeitsablaufzuweisung eine Aufgabe, die Ausrüstung (50, 51) zur Durchführung der Aufgabe und einen Ausrüstungspfad für die Aufgabe angibt **gekennzeichnet durch**
Empfangen von Positionsdaten und Betriebsdaten für die Ausrüstung (50, 51) von einer Verarbeitungsschaltung (150) mindestens einer Ausrüstung (50, 51), die ausgebildet ist, eine Kommunikationsverbindung mit der Baustellenanalysemaschine (10) herzustellen
Empfang von Mitarbeiterdaten, die eine Anzahl von Mitarbeitern umfassen, die auf der Baustelle (30) eingesetzt werden können;
Empfang von Positionsdaten von Mitarbeitervorrichtungen (60, 61), die den Mitarbeitern zugeordnet sind;
und
Bewertung der tatsächlichen Durchführung des Arbeitsablaufs durch die Mitarbeiter auf der Grundlage der Positionsdaten und der Betriebsdaten für die Ausrüstung (50, 51) und die Mitarbeiter.

15. Verfahren nach Anspruch 14, wobei die Bilddaten perspektivische Winkel enthalten, die den Bildern entsprechen, wobei das Verfahren ferner umfasst:
Erzeugen des virtuellen Layouts als räumliches Modell der Baustelle (30) einschließlich topografischer Daten auf der Grundlage der Bilddaten mit den perspektivischen Winkeln; und
Generierung des Pfades für die Ausrüstung auf der Grundlage des virtuellen Layouts mit den topografischen Daten.

## Revendications

1. Un système comprenant:
un véhicule autonome (20) comprenant une caméra (126) et un capteur de position (127), le véhicule autonome (20) étant configuré pour faire fonctionner la caméra (126) et le capteur de position (127) afin de capturer des données d'image associées à un chantier (30), les données d'image comprenant des images du chantier (30) avec des coordonnées de position correspondantes;
et
le moteur d'analyse de chantier (10) comprenant un circuit de traitement (101), le circuit de traitement (101) étant configuré pour:
recevoir les données d'image du chantier (30) capturées par le véhicule autonome (20);
générer un plan virtuel du chantier (30) sur la base des données d'image;
recevoir des données sur l'équipement comprenant une liste d'équipements disponibles pour être déployés sur le chantier (30) avec les attributs d'équipement correspondants
recevoir des données sur l'équipage comprenant un nombre de membres de l'équipage disponibles pour être déployés sur le chantier (30) générer un flux de travail basé sur la disposition virtuelle, les données relatives à l'équipement et les données relatives à l'équipe, le flux de travail comprenant des affectations de flux de travail pour chaque membre de l'équipe sur le chantier (30), chaque affectation de flux de travail indiquant une tâche, un équipement pour effectuer la tâche et un chemin d'équipement pour la tâche; **caractérisé en ce que** le système comprend en outre: au moins un équipement (50, 51) comprenant un circuit de traitement (150) configuré pour établir un lien de communication avec un moteur d'analyse de chantier (10) du système pour fournir au moteur d'analyse de chantier (10) des données de position et des données d'opération pour l'équipement (50, 51); un dispositif d'équipage (60, 61) configuré pour suivre la position d'un membre de l'équipage et configuré pour communiquer avec ou lire une étiquette sur l'équipement (50, 51) afin de déterminer la proximité de l'équipement (50, 51) et de déterminer que le membre de l'équipage utilise l'équipement (50, 51) et comprenant un circuit de traitement (160) configuré pour établir un lien de communication avec le moteur d'analyse de chantier (10) afin de fournir au moteur d'analyse de chantier (10) des données sur la position du dispositif d'équipage (60, 61);
et dans lequel le circuit de traitement (101) est en outre configuré pour:
évaluer l'exécution réelle du flux de travail par l'équipage sur la base des données de position et des données de fonctionnement saisies par au moins un équipement (50, 51) et au moins un dispositif de l'équipage (60, 61).

2. Le système de la revendication 1, dans lequel les données d'image comprennent des angles de perspective correspondant aux images dans lequel le circuit de traitement (101) est configuré pour générer la disposition virtuelle sous la forme d'un modèle géospatial du chantier (30) comprenant des données topographiques sur la base des données d'image comprenant les angles de perspective; et
le circuit de traitement (101) est configuré pour générer le chemin de l'équipement sur la base de la disposition virtuelle comprenant les données topographiques.

3. Le système de la revendication 1, dans lequel le circuit de traitement (101) est en outre configuré pour déterminer une pluralité de zones de travail (500,...,506) à l'intérieur du chantier (30) sur la base de la disposition virtuelle, des données relatives à l'équipement et des données relatives à l'équipage; et
dans lequel le circuit de traitement (101) est configuré pour générer le flux de travail sur la base des zones de travail (500,...,506), chaque affectation de flux de travail indiquant également une zone de travail (500,...,506) pour une tâche.

4. Le système de la revendication 3, dans lequel le circuit de traitement (101) est configuré pour générer le chemin de l'équipement sur la base de la pluralité de zones de travail (500,...,506)

5. Le système de la revendication 1, dans lequel les attributs de l'équipement pour les données de l'équipement comprennent des informations indiquant une largeur de pont et un rayon de braquage.

6. Le système de la revendication 1, dans lequel le véhicule autonome (20) comprend un capteur configuré pour générer des données de capteur à intégrer aux données d'image dans le moteur d'analyse de chantier (10).

7. Le système de la revendication 1, dans lequel le circuit de traitement (101) est configuré pour générer le flux de travail sur la base de données météorologiques comprenant des données de précipitations et des données d'exposition au soleil.

8. Le système de la revendication 1, dans lequel le circuit de traitement (101) est configuré pour générer la disposition virtuelle sur la base de données d'images historiques, et dans lequel le circuit de traitement (101) est configuré pour identifier les objets mobiles dans la disposition virtuelle sur la base des différences entre les données d'images historiques et les données d'images capturées par le véhicule autonome (20).

9. Le système de la revendication 1, comprenant en outre un équipement de gestion de la végétation, l'équipement de gestion de la végétation comprenant un capteur de position de l'équipement (156) configuré pour capturer une position de l'équipement afin de générer des données de position de l'équipement; et
le circuit de traitement (101) est en outre configuré pour déterminer la conformité avec le flux de travail sur la base des données relatives à la position de l'équipement.

10. Le système de la revendication 9, dans lequel l'équipement de gestion de la végétation comprend en outre une interface utilisateur (154) configurée pour fournir le chemin de l'équipement à un membre de l'équipe.

11. Le système de la revendication 1, dans lequel le circuit de traitement (101) est configuré pour générer la trajectoire de l'équipement sur la base de la disposition virtuelle comprenant un motif de bandes de gazon défini par l'utilisateur.

12. Le système de la revendication 1, dans lequel le circuit de traitement (101) est en outre configuré pour déterminer un emplacement de stationnement pour un véhicule de transport d'équipement (40) sur la base de la disposition virtuelle et du flux de travail.

13. Le système de la revendication 1, dans lequel le circuit de traitement (101) est en outre configuré pour générer une recommandation d'achat d'équipement sur la base de l'agencement virtuel et des données relatives à l'équipement.

14. Une méthode mise en œuvre par ordinateur comprenant:
capturer des données d'image associées à un chantier (30), les données d'image étant capturées par un véhicule autonome (20) comprenant une caméra (126) et un capteur de position (127), le véhicule autonome (20) étant configuré pour faire fonctionner la caméra (126) et le capteur de position (127) afin de capturer les données d'image avec des coordonnées de position correspondantes;
recevoir les données d'image du chantier (30) capturées par le véhicule autonome (20) par le circuit de traitement (101) d'un moteur d'analyse de chantier (10);
générer un plan virtuel du chantier (30) sur la base des données d'image par le circuit de traitement (101);
recevoir des données sur l'équipement comprenant une liste d'équipements disponibles pour être déployés sur le chantier (30) avec les attributs d'équipement correspondants;
générer un flux de travail basé sur la disposition virtuelle, les données relatives à l'équipement et les données relatives à l'équipe, le flux de travail comprenant des affectations de flux de travail pour chaque membre de l'équipe sur le chantier (30), chaque affectation de flux de travail indiquant une tâche, l'équipement (50, 51) pour effectuer la tâche et un chemin d'équipement pour la tâche
**caractérisé par**
réception des données de position et des données de fonctionnement de l'équipement (50, 51) à partir du circuit de traitement (150) d'au moins un équipement (50, 51) configuré pour établir un lien de communication avec le moteur d'analyse de chantier (10)
recevoir les données relatives à l'équipage comprenant le nombre de membres de l'équipage disponibles pour être déployés sur le chantier (30); recevoir les données de position des dispositifs de l'équipage (60, 61) associés aux membres de l'équipage;
et
évaluer l'exécution réelle du flux de travail par l'équipage sur la base des données de position et des données de fonctionnement de l'équipement (50, 51) et des membres de l'équipage.

15. Méthode de la revendication 14, dans laquelle les données d'image comprennent des angles de perspective correspondant aux images dans laquelle la méthode comprend en outre
générer la disposition virtuelle sous la forme d'un modèle géospatial du chantier (30) comprenant des données topographiques sur la base des données d'image comprenant les angles de perspective; et
générer la trajectoire de l'équipement sur la base de la disposition virtuelle comprenant les données topographiques.
